# EUROPEAN PATENT APPLICATION

(11) **EP 1 770 540 A1**
(43) Date of publication of application: **04.04.2007**
(21) Application number: 05743681.8
(22) Date of filing: 24.05.2005
(51) Int. Cl.: G06F 15/00

(54) **DATA PROCESSING DEVICE**

(30) Priority: 15.06.2004 JP 2004177582
(71) Applicant: MATSUSHITA ELECTRIC INDUSTRIAL CO., LTD., Osaka 571-8501 (JP)
(72) Inventor: TAKAHASHI, Eiji c/o Matsushita El. Ind. Co. Ltd., Chuo-ku, Osaka-shi, Osaka 540-6319 (JP); NOGUCHI, Naohiko c/o Matsushita El. Ind. Co. Ltd., Chuo-ku, Osaka-shi, Osaka 540-6319 (JP); UCHIDA, Osamu c/o Matsushita El. Ind. Co. Ltd., Chuo-ku, Osaka-shi, Osaka 540-6319 (JP)
(74) Representative: Grünecker, Kinkeldey, Stockmair & Schwanhäusser Anwaltssozietät
(86) International application number: PCT/JP2005/009470
(87) International publication number: WO 2005/124573

(57) **Abstract**

There is provided a data processing device realizing a purchase after trial listening of a large-capacity content and enabling export of a content to a different content handling system, transfer of the content to a reproduction-dedicated terminal, and copying. A mobile communication terminal device (11) using the data processing device downloads right data for trial listening and content data before export from a server (12), accumulates the right data for trial listening in an accumulation unit (25) and temporarily accumulates the content data before export in a memory card (13), thereby enabling trial listening of the content data before export by the reproduction function. When the user desires to purchase a content after its trial listening, the mobile communication terminal device (11) downloads limitless right data from the server (12) and converts the stored content data before export and the limitless right data into a format matched with the memory card (13) for exporting them in the memory card (13).

## Description

### Technical Field

The present invention relates to a data processing apparatus for performing processing of data including license data relating to handling of digital content for electronic equipment such as mobile information terminal and mobile telephone apparatus and recording media such as a memory card.

### Background Art

As a result of improvements in performance etc. of the network environment of the Internet etc., digital content containing digital data such as images and audio etc. is becoming widely distributed, and content management such as copyright protection etc. of this digital content is therefore becoming an important problem. There is no deterioration in literary works such as music put into digital form no matter how many times copying takes place and regardless of the distances involved in transmission and reception. Therefore, as the Internet becomes more widespread and the speed and capacity of personal computers increases, illegal distribution and exchange etc. without obtaining the writers permission is becoming more widespread.

In the related art, methods of managing content using copy protection using authentication between modules (see, for example, Patent Document 1) and methods of managing distributed content using ID's (see, for example, Patent Document 2) have been proposed as methods of preventing the illegal copying and distribution of digital content supplied via communication lines and recording media.

Further, in recent years, DRM (Digital Rights Management) technology that applies restrictions to the distribution and reproduction etc. of digital content has grasped the attention as technology for managing the handing of digital content and protecting copyrights etc. Various specific embodiments of DRM systems exist, such as the case of integration in a recording medium such as a memory card, the case of incorporation into software for playing audio and moving pictures, the case of incorporation into software for transmitting, receiving, and transferring software, and combinations of these cases, etc. In a DRM system, usage rights (described as license data relating to handling) corresponding to each content are assigned, and utilization of contents playback etc. is managed based on this license data. Utilization of content is therefore not possible without license data, and utilization can also no longer be carried out once utilization rights in the license data have expired.

There exists a number of such DRM systems, and the format of compatible content data (content type), method of describing license data and content that can be described differ depending on the respective DRM systems. As a result, the generation of content data and license data every DRM system on the content distribution side (authors rights, distributor, etc.) is therefore troublesome. Content management method and apparatus capable of distributing the same content amongst a number of different DRM systems have also been proposed (see, for example, Patent Document 3).

On the other hand, with users on the content-receiving side, in the case of transmission where, for example, transcription of the format and code for content data is carried out in such a manner as to enable handling of content at other recording media and equipment etc., output is normally possible for recording media and equipment managed by the same DRM system, but output is usually not possible for recording media and equipment managed by a different DRM system. For example, content downloaded for mobile information terminal use is managed by specific DRM systems for managing the mobile information terminal, and recording in a memory card managed by a different DRM system for utilization by other equipment is not possible. It would therefore be convenient if transcription and outputting of data in such a manner as to enable utilization between recording media and equipment managed by difference DRM systems (hereinafter referred to as "export") could be executed in an arbitrary manner for users of content etc.

Further, there are also situations where content is sold in such a manner that as a result of using handling permission information relating to number of times of possible utilization and usage period, and content utilization as usage authority in license data and then, for example, distributing rights that restricts the number of possible times of free utilization together with the content, it is possible for the content to be previewed and license data without restriction to be purchased afterwards. "Preview" is the case of utilization of the content in a limited manner in a state where license data restricted with respect to utilization is obtained without the user acquiring unrestricted license data. Examples of "preview" may include playing back of sounds, or the reproduction or displaying of images, printing, etc.

Here, in "purchase after previewing", a procedure is adopted where a user first receives a distribution of license data for previewing use and content, and then after playing back the content using the license data for previewing use, purchases the unrestricted license data. Further, "license data with restrictions for previewing use" may be setting of a number of possible times of use (for example, up to three times, etc.), usage restrictions (for example, a number of days from the first time of playback up to a certain day of a certain month, etc.), total playback time for possible use (for example, a total playback time of ten minutes, etc.), utilizable portion (for example, only the first thirty-second portion of a three-minute song, etc.), and utilizable quality (for example, reduced song quality, etc.).

Further, there are cases where there are limits on memory capacity at terminals such as mobile telephones etc. and there may therefore be cases where distribution of large capacity content is not possible. However, there are also methods of exporting to memory cards at the same time as distributing the content data in the event of a terminal where a large capacity memory card managed by a different DRM system is installed.

Further, there are also methods of transferring content from terminal A to terminal B
where, for example, terminal A and terminal B have the same DRM system as another form of content distribution. In this event, downloading of content and purchasing of license data (purchasing procedure only, or both purchasing procedure and downloading of license data) are carried out at terminal A, the content and license data are transferred to terminal B, and utilization of content is carried out at terminal B. Here, there are also cases where terminal A has a network connection function and terminal B does not have a network connection function.

Specifically, for example, a configuration may be adopted where terminal A is a personal computer, terminal B is a mobile telephone, terminal A is connected to a network, and data is transferred using a local link function such as storage media or IrDA (Infrared Data Association: Infrared communication) etc. between terminal A and terminal B. Terminal A selects content and license data for terminal B use at content providing server via a network, performs purchasing processing, acquires only content from content providing source server via the network, and transfers content to terminal B via storage media and IrDA etc. Terminal B then connects to the network, acquires license data for the purchasing processing settlement from terminal A, and makes it possible to utilize content.

In this distribution form, it is possible to download large capacity content via the Internet (broadband) with high speed rather than via a mobile network, and it is also possible to complete purchasing processing at the same time as downloading content.

In a further situation, a configuration is adopted where terminal A is a mobile telephone, terminal B is a terminal dedicated to playing back music. Terminal A is then connected to the network, and terminal A and terminal B are connected using stored media or IrDA, etc. Upon selecting content and license data for terminal B use at content providing server via a network, performing purchasing processing, and acquiring content and license data from content providing source server via the network, terminal A transfers the content and license data to terminal B via IrDA.

In the case of this distribution situation, it is also possible to implement selection/purchasing processing of content in order to playback using a music playback-dedicated terminal that does not possess a network connection function or user interface appropriate for content selection/purchasing processing with a terminal provided with a network function such as a mobile telephone etc..
Patent Document 1: Japanese Patent Application Laid-Open No.11-306092 (paragraphs [0030] to [0098], FIG. 1).
Patent Document 2: Japanese Patent Application Laid-Open No. 2001-282626 (paragraphs [0016] to [0070], FIG.1).
Patent Document 3: Japanese Patent Application Laid-Open No.2002-297451 (paragraphs [0027] to [0063], FIG. 1).

### Disclosure of Invention

### Problems to be Solved by the Invention

However, with a large capacity memory card managed by a different DRM system, there are cases where the number of times of usage and usage limits are not supported so that the procedure for purchasing after previewing cannot be achieved in the distribution of large capacity content.

Further, in the event of distribution form where content is transferred from terminal A having the same DRM system to terminal B, at terminal A that is the transfer source and at terminal B that is the transfer destination, even if the DRM system is the same, this is not limited to all of the functions of this DRM system being supported, and in particular in the case where terminal B is a terminal giving serious consideration to playback of content, this is not limited to having a preview function, and utilization of a content preview function is not possible under at the source of the utilization limit set by the content providing source.

It is therefore an object of the present invention to provide a data processing apparatus capable of implementing purchasing of content after preview of a large volume of content, that is capable of exporting content data to systems handling different content, and is capable of transferring and copying content to playback-dedicated terminals.

### Means for Solving the Problem

Data processing apparatus of the present invention adopts a configuration including a storage medium that stores content distributed from a distribution source, a previewing processing section that carries out previewing processing of the stored content, an acquisition section that acquires license data relating to handling of the content from a distribution source, a transcription section that reads out the license data and the stored content, and transcribes the license data and the stored content in such a manner as to be compatible with a management system that handles content of an export destination, and a management section that stores the transcribed license data and content in the storage medium.

### Advantageous Effect of the Invention

According to the present invention, it is possible to implement purchasing after previewing of large capacity content, and it is possible to implement exporting of content to systems handling different content and to transfer and copy content to playback-dedicated terminals.

### Brief Description of the Drawings

FIG.1 shows an overall configuration for a content distribution system according to Embodiment 1 of the present invention;
FIG.2 is a block view showing an internal configuration for mobile communication terminal apparatus of FIG.1 according to Embodiment 1;
FIG.3 schematically shows a download operation for license data for previewing use before export and content data before export according to Embodiment 1;
FIG.4 schematically shows a previewing operation for content data before export utilizing license data for previewing use before export according to Embodiment 1;
FIG.5 schematically shows a download operation for unrestricted license data before export according to Embodiment 1;
FIG.6 schematically shows an export operation for unrestricted license data before export and content data according to Embodiment 1;
FIG.7 schematically shows the datails of a download operation and a previewing operation for license data for previewing use before export and content data before export according to Embodiment 1;
FIG.8 shows the datails of a download operation for unrestricted license data before export and an export operation for unrestricted license data and content data before export according to Embodiment 1;
FIG.9 shows an example configuration for content data according to Embodiment 1;
FIG.10 shows an example configuration for license data for previewing use before export and unrestricted license data before export according to Embodiment 1;
FIG.11 schematically shows a download operation for content data for previewing use and content data for purchasing use before export according to Embodiment 2 of the present invention;
FIG.12 schematically shows a previewing operation for content data for previewing use according to Embodiment 2;
FIG.13 schematically shows a download operation for unrestricted license data before export according to Embodiment 2;
FIG.14 schematically shows an export operation for unrestricted license data of content data before export and content data according to Embodiment 2;
FIG. 15 shows the datails of a download operation before export and a previewing operation according to Embodiment 2;
FIG. 16 shows the datails of a download operation for unrestricted license data before export and an export operation for unrestricted license data before export and content data before export according to Embodiment 2;
FIG.17 shows an example configuration for content data for previewing use before export and content data for purchasing use according to Embodiment 2;
FIG.18 shows an example configuration for unrestricted license data before export according to Embodiment 2;
FIG.19 is a block view showing an internal configuration for mobile communication terminal apparatus according to Embodiment 3 of the present invention;
FIG.20 is a block view showing an internal configuration for mobile terminal apparatus according to Embodiment 3;
FIG.21 schematically shows a download operation for content data and license data for previewing use for dedicated use by mobile communication terminal apparatus according to Embodiment 3;
FIG.22 schematically shows a previewing operation for content data and license data for previewing use for dedicated use by mobile communication terminal apparatus according to Embodiment 3;
FIG.23 schematically shows a download operation for content data utilizing unrestricted license data for dedicated use by mobile terminal apparatus according to Embodiment 3;
FIG.24 schematically shows a download operation for unrestricted license data for dedicated use by mobile terminal apparatus and content data according to Embodiment 3;
FIG.25 shows the datails of a download operation and a previewing operation for license data for previewing use for dedicated use by mobile communication terminal apparatus and content data according to Embodiment 3;
FIG.26 shows the datails of a download operation for unrestricted license data for dedicated use by mobile terminal apparatus and a transfer operation for the unrestricted license data and content data for dedicated use by mobile terminal apparatus according to Embodiment 3;
FIG.27 shows an example configuration for content data according to Embodiment 3;
FIG.28 shows an example configuration for license data for previewing use for dedicated use by mobile communication terminal apparatus and license data for purchasing use for dedicated use by mobile terminal according to Embodiment 3;
FIG.29 is a block view showing an internal configuration for mobile communication terminal apparatus according to Embodiment 4 of the present invention;
FIG.30 schematically shows a download operation for content data and license data for previewing use for dedicated use by mobile communication terminal apparatus according to Embodiment 4;
FIG.31 schematically shows a previewing operation for content data utilizing license data for previewing use for dedicated use by mobile communication terminal apparatus according to Embodiment 4;
FIG.32 schematically shows a download operation for license data for sharing and purchasing use according to Embodiment 4;
FIG.33 schematically shows a copy operation for license data for sharing and purchasing use and content data according to Embodiment 4;
FIG.34 schematically shows a download operation for content data and license data for previewing use for dedicated use by mobile communication terminal apparatus according to Embodiment 4;
FIG.35 shows the datails of a download operation for data for sharing and purchasing use and a copy operation for content data and license data for sharing and purchasing use according to Embodiment 4;
FIG.36 shows an example configuration for content data according to Embodiment 4; and
FIG.37 shows an example configuration for license data for previewing use for dedicated use by mobile communication terminal apparatus and license data for sharing and purchasing use according to Embodiment 4.

### Best Mode for Carrying Out the Invention

Now, preferred embodiments of the present invention will be described below in datail with reference to the accompanying drawing.

### (Embodiment 1)

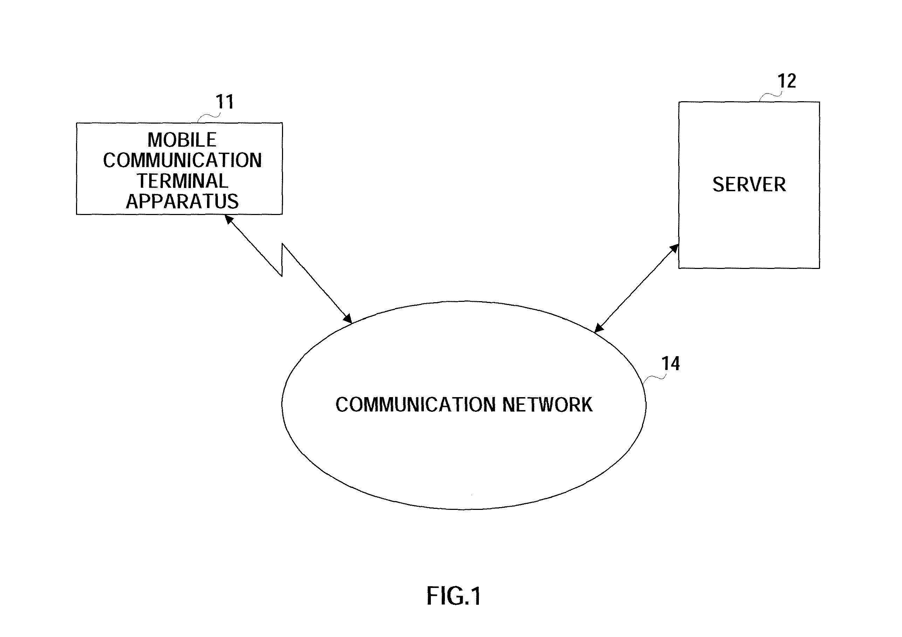

FIG.1 shows a configuration for a content distribution system according to Embodiment 1 of the present invention. Here, the configuration and operation for the case will be described where content data and license data for previewing use are downloaded and acquired from a content distribution source by mobile communication terminal apparatus such as mobile telephone apparatus, the content is temporarily stored in a memory card connected to mobile communication terminal apparatus, previewing processing for the stored content is carried out based on the DRM system for mobile communication terminal apparatus that are the export source using the acquired license data for previewing use, unrestricted license data is acquired from the content distribution source after this previewing processing, and content stored with this unrestricted data is transcribed and exported so as to be compatible with the management system handling content of the export destination, and exporting is carried out. In the example of this embodiment, a server corresponds to a content distribution source, and a mobile communication terminal apparatus corresponds to a data processing apparatus.

In FIG. 1, the content distribution system is composed of mobile communication terminal apparatus 11 that downloads content, server 12 that is a source of content distribution, and communication network 14 connecting mobile communication terminal apparatus 11 and server 12.

Mobile communication terminal apparatus 11 has a data processing apparatus function for downloading content data and license data for previewing use distributed by server 12, and carrying out previewing processing for data containing content data and license data for previewing use corresponding to the DRM system used at its own apparatus. At this mobile communication terminal apparatus 11, it is possible to utilize content according to content handling management by a DRM system at this mobile communication terminal apparatus 11. Here, content data may include types of data such as music, images, characters and software etc., or combinations thereof.

Further, utilization of content may be playing back of music content, displaying of images and character content, execution of software, and printing etc. Moreover, mobile communication terminal apparatus 11 also has a function for appropriately transcribing unrestricted license data in such a manner as to be compatible with different DRM systems in order to export content for media and apparatus such as memory card 13 under a different DRM system environment. Here, "compatible with a DRM system" means that utilization (playback, recording, transfer, etc.) in a manner conforming to regulations of this DRM system is possible.

Further, mobile communication terminal apparatus 11 has an export function for acquiring unrestricted license data relating to content already existing after previewing processing from server 12, and performing transcription and export in such a manner that unrestricted license data and already stored content are compatible with the content handling management system of memory card 13. License data may include, for example, information describing utilization conditions including handling permission information and restriction information relating to utilization of content such as number of possible usages of content and usage period, and whether or not export to another DRM system is possible, etc.

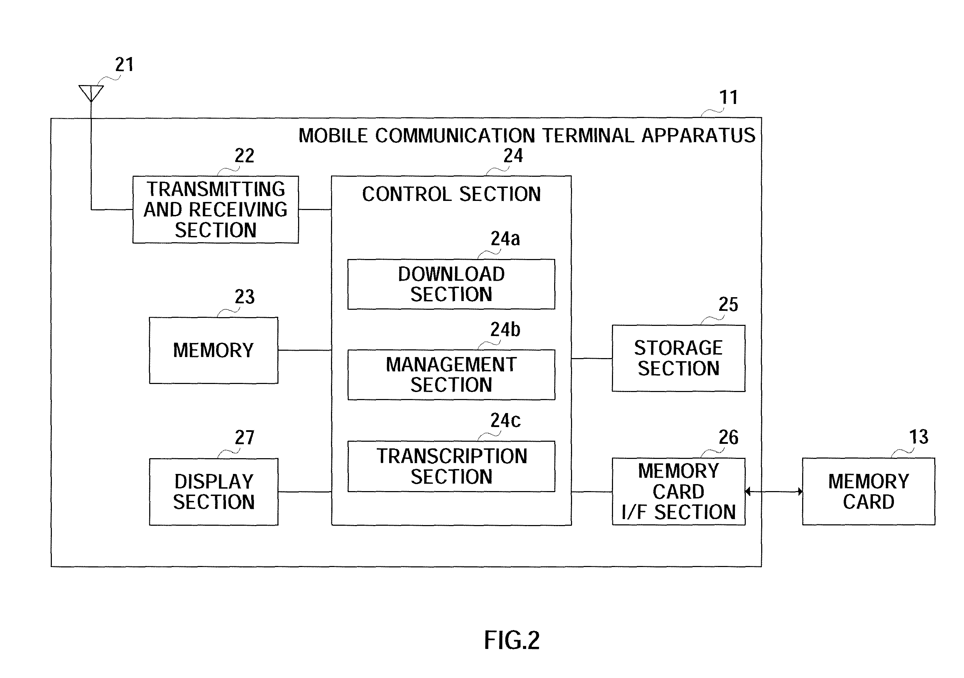

As shown in FIG.2, mobile communication terminal apparatus 11 is mainly composed of antenna 21, transmitting and receiving section 22, memory 23, control section 24, storage section 25, memory card I/F section 26, and display section 27. Antenna 21 transmits and receives communication signals in a wireless manner with server 12 via communication network 14. Transmitting and receiving section 22 has a wireless communication function for demodulating communication signals received by antenna 21 and output the signals to control section 24, and demodulating communication signals inputted by control section 24 for output to antenna 21. Memory 23 is composed of semiconductor memory such as ROM (Read Only Memory), and stores each type of control program etc. to be executed at control section 24.

As shown in FIG.2, control section 24 has a download section 24a, management section 24b and transcription section 24c. Download section 24a executes download processing for downloading content, license data for previewing use and unrestricted license data etc. from server 12.

Management section 24b stores downloaded content before export in memory card 13, and executes storage processing to store downloaded license data for previewing use in storage section 25. Further, management section 24b has a previewing processing function for reading out license data for previewing use from storage section 25, reading out content before export from memory card 13 and executing previewing processing. Further, management section 24b has a contents processing function for reading out a URL (Uniform Resource Locator) for license acquisition stored in content data before export, downloading unrestricted license data from server 12 using download section 24a, transcribing this unrestricted license data and stored content data before export using transcription section 24c, and executing export processing for performing exporting.

Transcription section 24c executes transcription processing for transcribing unrestricted license data and content data before export read out by management section 24b so as to be compatible with a DRM system of memory card 12 that is the export destination.

Storage section 25 stores license data for previewing use and unrestricted license data using management section 24b. Memory card I/F section 26 is for connecting memory card 13 in a removable manner and has a function for recording or reading out data such as unrestricted license data and data such as content etc. between control section 24 and memory card 13. Display section 27 is composed of a liquid crystal panel etc., and displays information in connection with communication, site screens for during browser activation, and information screens etc. for during previewing processing.

Memory card 13 is a recording medium for storing content and license data corresponding with DRM systems that are different from the DRM system used by mobile communication terminal apparatus 11. Communication network 14 may include any of various communication means such as a mobile communication network, telephone network, or Internet network, etc.

Server 12 is shown as being a single apparatus in the example of FIG . 1, but server 12 may also be composed of a number of server apparatuses having these functions. For example, different server apparatus may be provided as a content providing source and license data providing source, and a content distribution server and license data distribution server may be provided separately. Further, it is also possible for a license data distribution server to be provided separately from a distribution server for license data for previewing use and a distribution server for unrestricted license data.

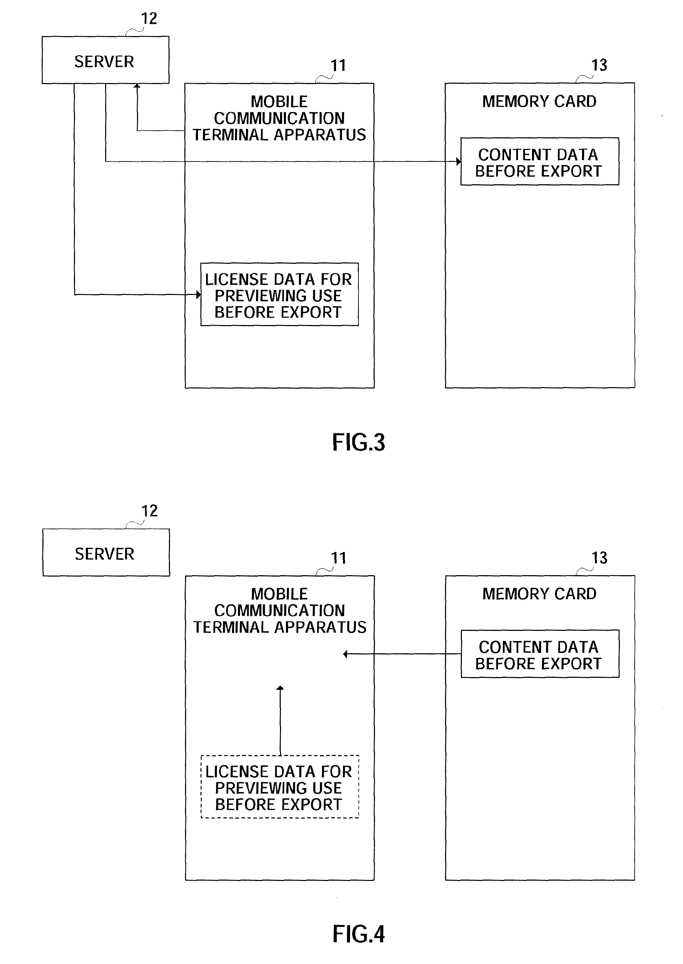

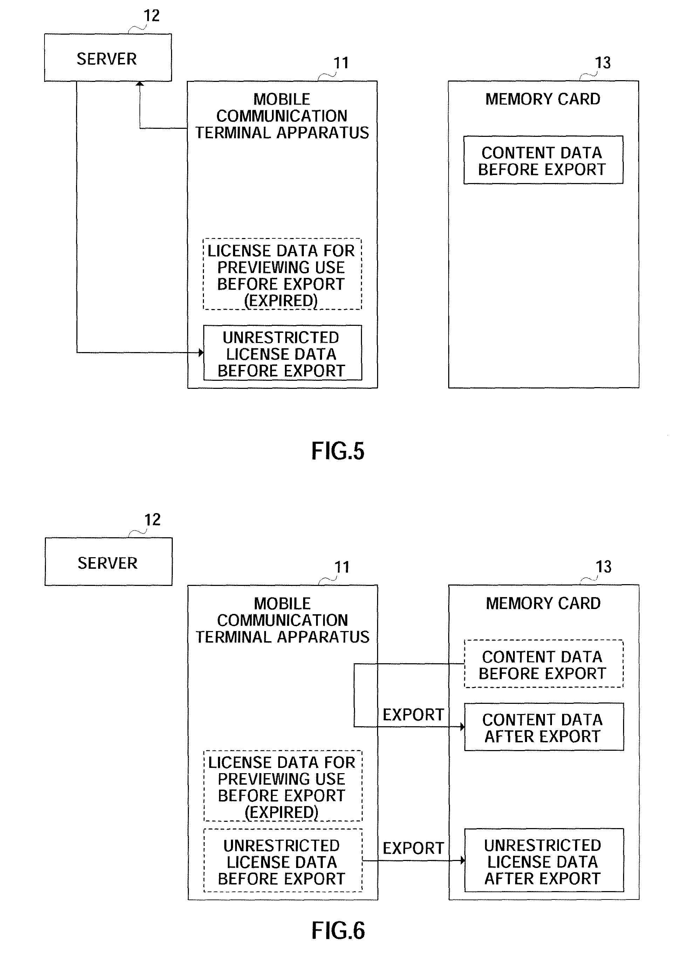

Next, the operation of a content distribution system of this embodiment will be described with reference to FIG.3 to FIG.8. First, an outline of a previewing operation for content and an export operation will be described with reference to FIG.3 to FIG.6. FIG.3 and FIG.4 schematically show a download operation for license data for previewing use before export and content data before export and a previewing operation. FIG.5 and FIG.6 schematically show a download operation for unrestricted license data before export and an export operation for content.

First, in FIG.3, mobile communication terminal apparatus 11 accesses server 12, downloads license data for previewing use before export and stores it in storage section 25, downloads the content data before export, and stores it in memory card 13. Next, in FIG.4, mobile communication terminal apparatus 11 utilizes license data for previewing use before export stored in storage section 25 in order to execute previewing processing for content data before export stored in memory card 13 based on the DRM system of mobile communication terminal apparatus 11.

Next, in FIG.5, mobile communication terminal apparatus 11 accesses server 12, downloads unrestricted license data before export and stores it in storage section 25. After this, in FIG.6, mobile communication terminal apparatus 11 transcribes the unrestricted license data before export stored in storage section 25 to be compatible with the DRM system of memory card 13, and exports it to memory card 13. Further, mobile communication terminal apparatus 11 transcribes content data before export stored in memory card 13 to be compatible with the format of memory card 13 and exports this data to the memory card.

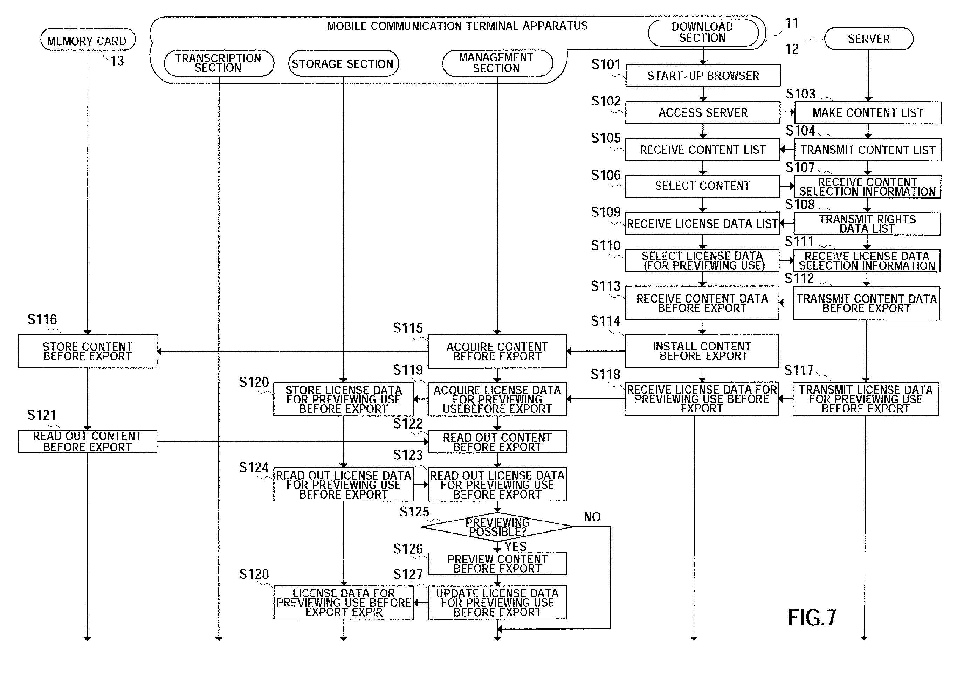

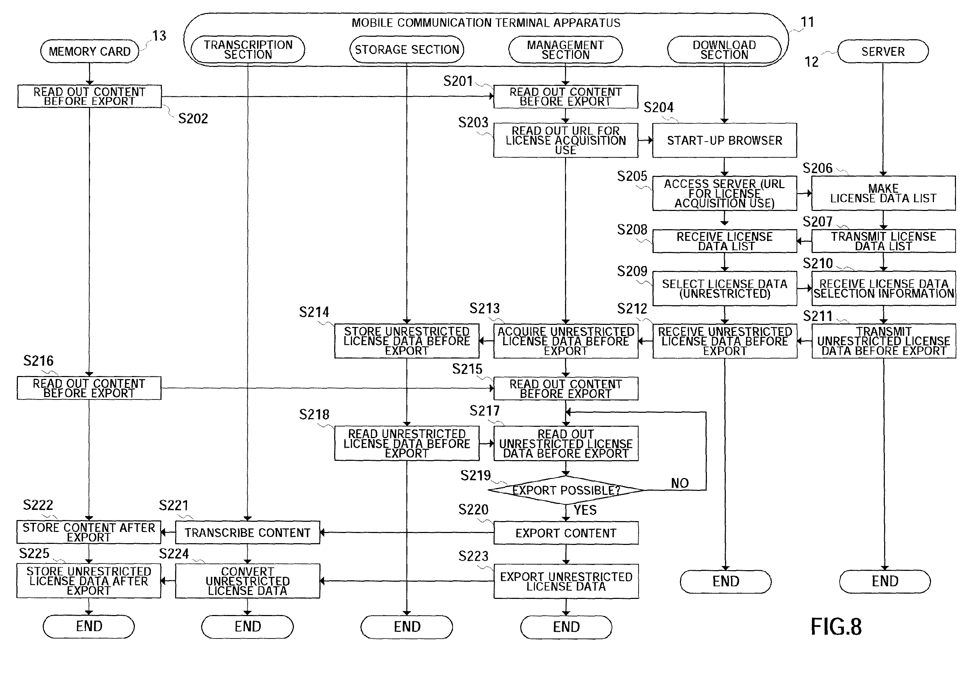

Next, datails of a previewing operation for content and an export operation will be described with reference to FIG. 7 and FIG.8. FIG. 7 shows the datails of a download operation before export and a previewing operation for the content distribution system of this embodiment shown in FIG.3 and FIG.4. FIG.8 shows the datails of an export operation for the content distribution system of this embodiment shown in FIG.5 and FIG.6.

In FIG.7, at mobile communication terminal apparatus 11, download section 24a within control section 24 starts up a browser (step S101), and accesses a URL of server 12 (step S102). In this event, it is taken that server 12 supplies a content distribution service site for distributing content over communication network 14.

Next, when there is an access from mobile communication terminal apparatus 11, server 12 makes a content list showing content that is the target of distribution in a list (step S103), and transmits this content list to mobile communication terminal apparatus 11 (step S104). Next, download section 24a of mobile communication terminal apparatus 11 receives the content list from server 12 at transmitting and receiving section 22 (step S105), displays this content list at display section 27, and causes the user to select the desired content (step S106). When the desired content is selected by the user, download section 24a of mobile communication terminal apparatus 11 transmits this content selection information to server 12 using transmitting and receiving section 22.

Next, upon receiving the content selection information from mobile communication terminal apparatus 11 (step S107), server 12 transmits a license data list relating to the selected content to mobile communication terminal apparatus 11 (step S108). Upon receiving the license data list from server 12 (step S109), download section 24a of mobile communication terminal apparatus 11 displays this license data list at display section 27, and causes the user to select the desired license data (step S110). When the desired license data (for previewing use) is selected by the user, download section 24a of mobile communication terminal apparatus 11 transmits this license data selection information to server 12 using transmitting and receiving section 22.

Next, upon receiving the license data selection information from mobile communication terminal apparatus 11 (step S111), server 12 transmits content data for the selected content before export to mobile communication terminal apparatus 11 (step S112). Upon receiving the content data before export from server 12 (step S113), download section 24a of mobile communication terminal apparatus 11 instructs installation of content data before export to management section 24b (step S114).

Next, management section 24b of mobile communication terminal apparatus 11 receives the instruction to install the content data before export, acquires content data before export from download section 24a (step S115), and stores content data before export in memory card 13 via memory card I/F section 26 (step S116).

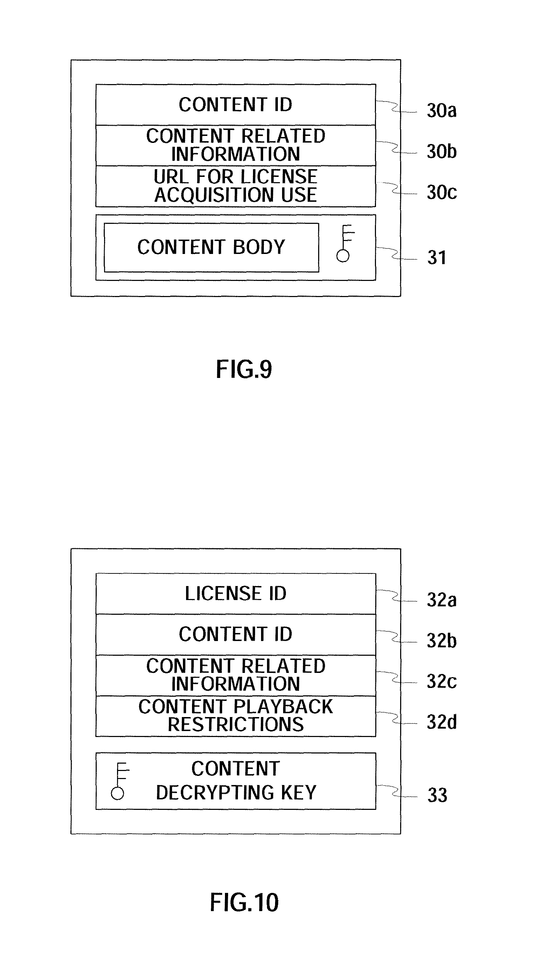

An example configuration for content data before export is shown in FIG.9. Content data before export includes content ID 30a, content related information 30b, license acquisition URL 30c and content body 31. Content ID 30a is ID information for correlating content data and license data by collation with license data for previewing use before export which will be described later and content ID 32b contained in unrestricted license data before export. Content related information 30b is additional information etc. relating to content data such as title and author of content data etc. License acquisition URL 30c is URL information for acquiring license data corresponding to content data from server 12. Content body 31 is stored in a state encrypted by a content encryption key, and as this content encryption key is stored in the corresponding license data, utilization is not possible without the corresponding license data.

An example configuration for license data for previewing use before export is shown in FIG.10. License data for previewing use before export includes license ID 32a, content ID 32b, content related information 32c, content playback restrictions 32d and content decrypting key 33. License ID32a is specific ID information for identifying this license data. Content ID32b is ID information for collation with content ID30b contained in the content data before export. Content related information 32c is additional information etc. relating to the content data. Content playback restrictions 32d sets information restricting the playback of content data. In the case of this embodiment, for example, it is taken that a previewing number of 3 times, and a previewing limit of the *day of the *month is set. Content decrypting key 33 is utilized in decrypting of content body 31 of the above content data before export.

Next, server 12 transmits license data for previewing use before export to mobile communication terminal apparatus 11 (step S117). Upon receiving the license data for previewing use before export from server 12 (step S118), download section 24a of mobile communication terminal apparatus 11 transfers license data for previewing use before export to management section 24b. Upon acquiring license data for previewing use before export from download section 24a (step S119), management section 24b stores license data for previewing use before export in storage section 25 (step S120).

Next, management section 24b of mobile communication terminal apparatus 11 reads out the content data before export from memory card 13 (steps S121, S122), and reads out license data for previewing use before export from storage section 25 (steps S123, S124). After this, management section 24b determines whether or not license data for previewing use before export which were read out and content data before export can be previewed by the DRM system and playback function of mobile communication terminal apparatus 11 (step S125). For example, it is determined whether or not there is correspondence between the license data for previewing use before export and the content ID of the content data, or whether the remaining number of utilizations of the license data for previewing use before export is one or more, etc. In the event that it is determined that previewing is possible (step S125: YES), management section 24b executes previewing processing for the content data before export (step S126). Previewing processing for the content data before export is executed by utilizing the content playback function within mobile communication terminal apparatus 11. Further, in the event that it is determined that previewing is not possible (step S125: NO), management section 24b discontinues previewing processing.

Next, management section 24b of mobile communication terminal apparatus 11 updates license data for previewing use before export after previewing processing (step S127), stores updated license data for previewing use before export in storage section 25 (step S128), and ends this previewing processing.

The user then previews the content data before export using mobile communication terminal apparatus 11, and in the event that conditions set in restriction information are satisfied such as a number of 3 previews, or the previewing period of up to day * of month *, for example, previewing becomes no longer possible, a message including an inquiry as to the desire to purchase the content etc. is displayed at display section 27, and the user is invited to perform a content purchase operation after previewing. In the event that the user wishes to purchase the content, the process moves to the processing of FIG.8.

Next, in FIG.8, management section 24b of mobile communication terminal apparatus 11 reads out content data before export from memory card 13 (steps S201, S202), reads out license acquisition URL30c stored in the content data before export (step S203), and outputs this to download section 24a.

Download section 24a starts up a browser using a license acquisition URL inputted by management section 24b (step S204) and accesses server 12 (step S205). When the URL for license acquisition is accessed by mobile communication terminal apparatus 11, server 12 makes a license data list (step S206), and transmits this license data list to mobile communication terminal apparatus 11 (step S207). Upon receiving the license data list from server 12 (step S208), download section 24a of mobile communication terminal apparatus 11 displays this license data list at display section 27, and causes the user to select the desired license data (step S209). When the desired license data is selected by the user, download section 24a of mobile communication terminal apparatus 11 transmits this license data selection information to server 12 using transmitting and receiving section 22.

Next, upon receiving the license data selection information from mobile communication terminal apparatus 11 (step S210), server 12 transmits the corresponding unrestricted license data before export to mobile communication terminal apparatus 11 (step S211), and ends the processing. Upon receiving the unrestricted license data before export from server 12 (step S212), download section 24a of mobile communication terminal apparatus 11 outputs the unrestricted license data before export to management section 24b, and ends the processing. Upon acquiring unrestricted license data before export from download section 24a (step S213), management section 24b stores this unrestricted license data before export in storage section 25 (step S214).

An example configuration for unrestricted license data before export is shown in FIG.10. This is the same format as the license data for previewing use before export, but in the case of this embodiment, content playback restrictions 32d are taken to be set as "no restrictions." Content ID32b and content decrypting key 33 have to be the same as the license data for previewing use before export, but license ID32a may be set with a separate ID to that of the license data for previewing use before export.

Next, management section 24b reads out the content data before export stored in memory card 13 via memory card I/F section 26 (steps S215, S216), and reads out unrestricted license data before export from storage section 25 (steps S217, S218). Continuing on, management section 24b determines whether or not content data before export and unrestricted license data before export which were read out are capable of being exported to a different DRM system of memory card 13 (step S219).

In the event that it is determined by management section 24b that it is not possible to export the content data before export and the unrestricted license data before export to the different DRM system of memory card 13 (step S219: NO), the process is returned to step S217, other unrestricted license data before export is read out from storage section 25, and processing determining whether or not exporting is possible is similarly repeated.

Further, in the event that it is determined that it is possible to export the content data before export and the unrestricted license data before export to the difference DRM system of memory card 13 (step S219: YES), management section 24b passes the content data before export over to transcription section 24c (step S220), transcription to a format and encryption method compatible with memory card 13 that is the export destination takes place at transcription section 24c, and makes it content data after export (step S221), and stores content data after export in memory card 13 via memory card I/F section 26 (step S222).

Next, management section 24b passes unrestricted license data over to transcription section 24c (step S223), and ends the processing. Transcription section 24c transcribes the unrestricted license data passed over from management section 24b so as to be compatible with the DRM system of memory card 13, and make it unrestricted license data after export (step S224), stores the unrestricted license data after export in memory card 13 via memory card I/F section 26 (step S225), and ends the processing.

After this, memory card 13 is taken out from mobile communication terminal apparatus 11, and it is possible to playback the content data after export stored in memory card 13 by installing another mobile terminal apparatus compatible with the DRM system of memory card 13.

As shown above, in the content distribution system of Embodiment 1, license data for previewing use and content data before export are downloaded from server 12 by mobile communication terminal apparatus 11. License data for previewing use is then stored in storage section 25 within mobile communication terminal apparatus 11, content data before export is temporarily stored in memory card 13, and previewing of content data before export is possible using the playback function of mobile communication terminal apparatus 11.

Further, at the content distribution system of Embodiment 1, in the event that a customer wishes to purchase previewed content after previewing, unrestricted license data is downloaded from server 12 by mobile communication terminal apparatus 11, content data before export stored in memory card 13 is transcribed to a format compatible with memory card 13 and exported to memory card 13, and the unrestricted license data is transcribed so as to be compatible with the DRM system of memory card 13 and is exported to memory card 13.

Therefore, even if mobile terminal apparatus of the export destination does not have a previewing function, and even if the export source terminal apparatus itself and the export destination terminal itself do not have a large capacity storage function, previewing of large capacity content is possible by utilizing a memory card at the export source terminal. Further, it is also possible to determine purchasing of unrestricted license data after confirmation of the contents of content as a result of the user previewing large capacity content and it is possible to execute account processing only for content as necessary.

Further, an example of exporting to a memory card is shown in the content distribution system of this embodiment, but it is also possible to export to different DRMs other than storage media type DRMs such as memory cards etc., such as, for example, in local streaming protected by DRM (transferring or playing back from portions where transcription is complete while transcribing content for export use may be possible).

Further, in FIG.7, a license data list relating to content is transmitted to mobile communication terminal apparatus 11 (step S108) after a content list is transmitted from server 12 to mobile communication terminal apparatus 11 (step S104), but it is also possible for the content list and the license data list to be transmitted at the same time, and for content selection and acquisition of license data for previewing use to be carried out at the same time.

Further, in FIG.7, after content data is received before export from server 12 (step S113), license data for previewing use before export is received (step S118), but it is also possible for content data before export to be transmitted after transmitting of license data for previewing use.

Further, in FIG.7, license data for previewing use before export is received (step S118) after content data before export is received from server 12 (step S113), but it is also possible for content data and license data for previewing use to be packaged and distributed together.

Further, after completion of the steps of FIG.7, in the event that conditions set in the restriction information for license data for previewing use are reached and the user wishes to purchase the content, the process moves to the processing of FIG.8, but even when conditions set in restriction information of license data for previewing use are not reached, a message including an inquiry as to whether it is wished to purchase content is displayed at display section 27 and the user is invited to perform a content purchasing operation after reviewing. In the event that the user wishes to purchase the content, the process may move to the processing of FIG.8.

Further, with the content distribution system of this embodiment, license data where restriction information of a number of 3 previews and a previewing period of day * and month * is set is assumed as license data for previewing use before export, but in place of this, it is also possible for license data to be without restrictions with respect to playback of the content, but to have license data with restrictions with respect to exporting.

Moreover, with the content distribution system of this embodiment, license data where restriction information of a number of 3 previews and a previewing period of day * of month * etc. is not set is assumed as unrestricted license data before export but in place of this, it is also possible for restrictions compatible with the DRM of the export destination to be used.

Further, with the content distribution system of this embodiment, content data after export is played back by removing mobile communication terminal apparatus 11 after export (step S220 to step S225) and installing other mobile terminal apparatus compatible with the DRM system of memory card 13, but it is also possible for mobile communication terminal apparatus 11 itself to be provided with a DRM function after export so that content data after export may be played back at mobile communication terminal apparatus 11.

Also, with the content distribution system of this embodiment, purchasing is carried out after previewing, but the license data for previewing use before export may not be free. For example, the license data for previewing use before export and the unrestricted license data before export may both be fee paying but the license data for previewing use before export may be set to a lower price. Further, conversely, it is also possible for unrestricted license data before export to be free.

Moreover, with the content distribution system of this embodiment, license acquisition URL 30c is stored within content data before export, but may also be stored within unrestricted license data before export.

Moreover, with the content distribution system of this embodiment, content data before export, license data for previewing use before export, and unrestricted license data before export are all acquired via communication network 14 from server 12, but data may also be acquired from a wired network such as the Internet, a broadcast network, or from other terminals etc.

Further, with the content distribution system of this embodiment, display section 27 of this embodiment is used in the case of displaying images or characters, but it is also possible for a speaker etc. to be provided so that the speaker may then be utilized in the case of playing back music etc.

### (Embodiment 2)

Embodiment 1 has shown a case where content for previewing use and content for purchasing use are the same, but license data for previewing use and license data for purchasing use (unrestricted) are taken to be separate. In Embodiment 2, the case will be described where content for previewing use and content for purchasing use are packaged and distributed together.

Each aspect of the configuration of the content distribution system and the mobile communication terminal apparatus of Embodiment 2 is taken to be the same as shown above in FIG. 1 and FIG.2 and description of drawings and configuration thereof will be omitted.

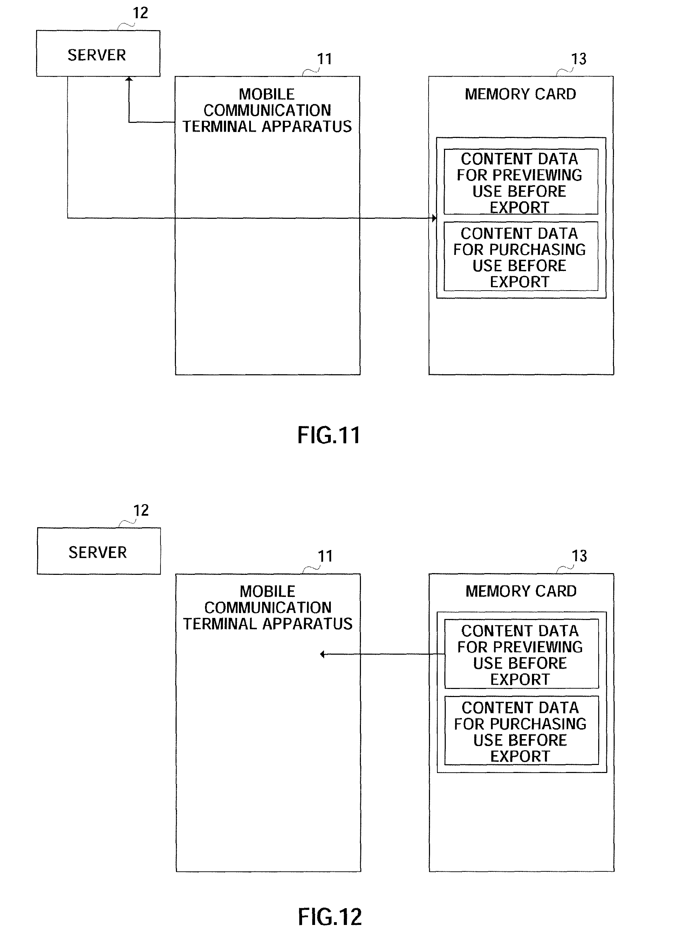

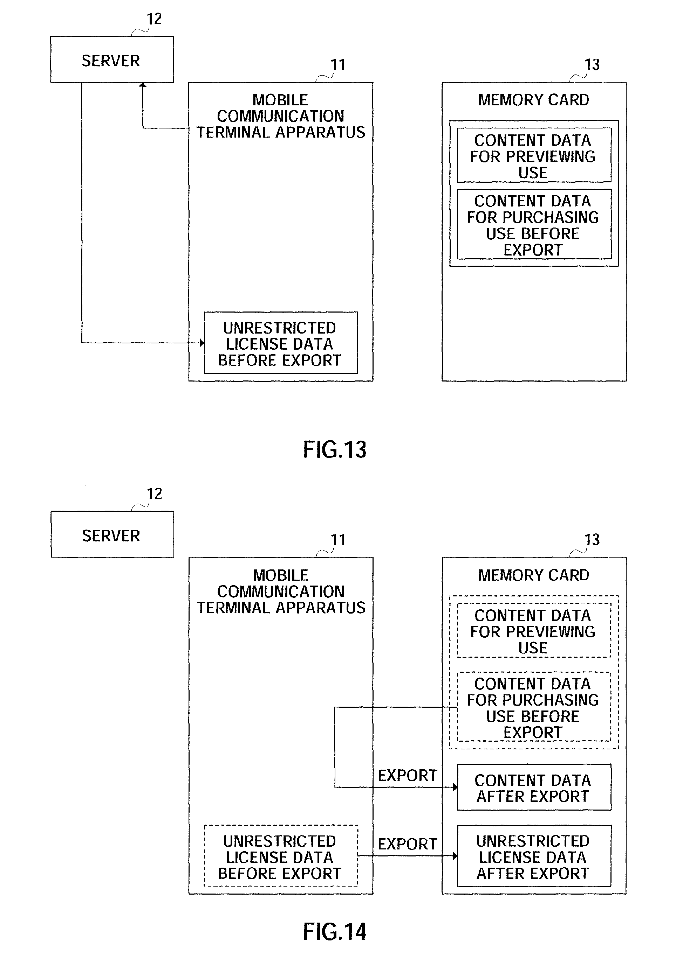

First, an outline of a previewing operation for content data and an export operation will be described with reference to FIG.11 to FIG.14. FIG.11 and FIG.12 schematically show a download operation for and a previewing operation for content data for previewing use and content data for purchasing use before export. FIG.13 and FIG.14 schematically show a download operation for unrestricted license data before export and an export operation for content data.

Content for previewing use may be, for example, that including only part of content data for purchasing use (only bridge portions of music data, the first minute of image data, etc.), that to which only part is strung together (digest), or that where quality has been made to deteriorate (that for which music data quality has been deteriorated, or where image size of image data has been compressed).

First, in FIG.11, mobile communication terminal apparatus 11 accesses server 12, and that where the content data for previewing use and content data for purchasing use before export are packaged together is downloaded and stored in memory card 13. Next, in FIG.12, mobile communication terminal apparatus 11 executes previewing processing of content data for previewing use before export stored in memory card 13 utilizing a playback function of mobile communication terminal apparatus 11.

After this, in FIG.13, mobile communication terminal apparatus 11 accesses server 12, downloads unrestricted license data before export , and stores it in storage section 25. Next, in FIG.14, mobile communication terminal apparatus 11 transcribes the unrestricted license data before export stored in storage section 25 so as to be compatible with the DRM system of memory card 13, and exports it to memory card 13. Further, mobile communication terminal apparatus 11 transcribes content data for purchasing use before export stored in memory card 13 so as to be compatible with the format of memory card 13 and exports it to the memory card.

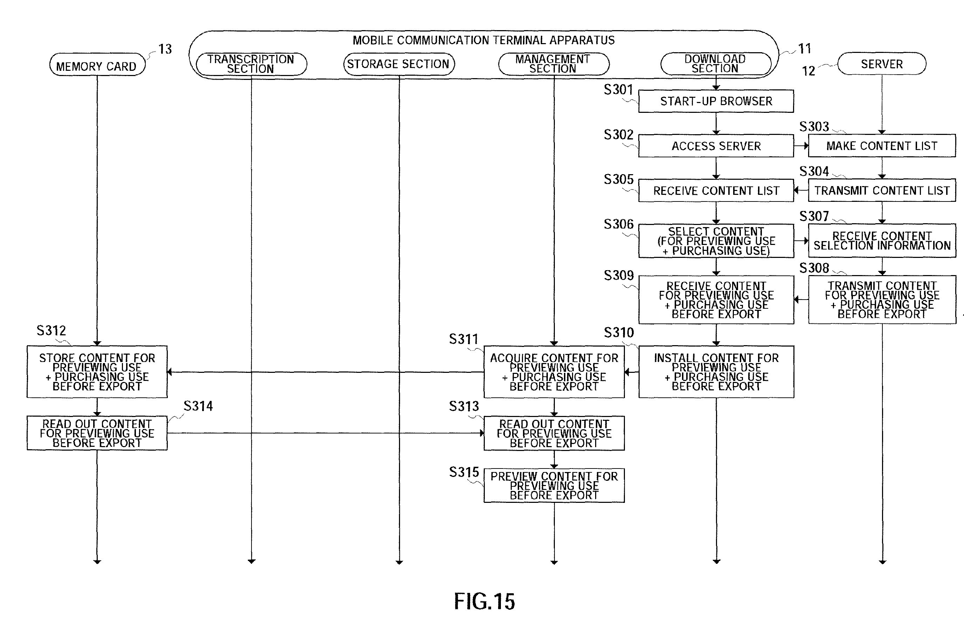

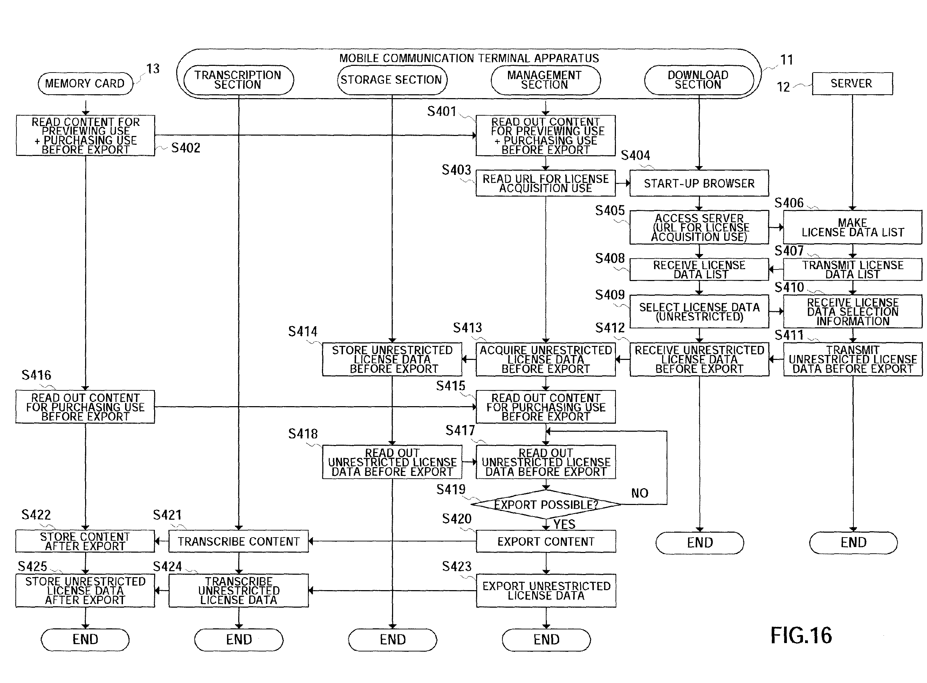

Next, datails of a previewing operation for content and an export operation will be described with reference to FIG.15 and FIG.16. FIG.15 shows the datails of a download operation before export and a previewing operation of the content distribution system of this embodiment shown in FIG.11 and FIG. 12. FIG.16 shows the datails of an export operation for the content distribution system of this embodiment shown in FIG.13 and FIG.14.

In FIG.15, at mobile communication terminal apparatus 11, download section 24a within control section 24 starts up a browser (step S301), and accesses a URL of server 12 (step S302). In this event, it is taken that server 12 supplies a content distribution service site for distributing content over communication network 14.

Next, when there is an access from mobile communication terminal apparatus 11, server 12 makes a content list showing content that is the target of distribution in a list (step S303), and transmits this content list to mobile communication terminal apparatus 11 (step S304). Next, download section 24a of mobile communication terminal apparatus 11receives the content list from server 12 at transmitting and receiving section 22 (step S305), displays this content list at display section 27, and causes the user to select the desired content (step S306). When the desired content is selected by the user, download section 24a of mobile communication terminal apparatus 11 transmits this content selection information (for previewing use + purchasing use) to server 12 using transmitting and receiving section 22.

Next, upon receiving content selection information (for preview use + purchasing use) from mobile communication terminal apparatus 11 (step S307), server 12 transmits the content data for previewing use before export and the content data for purchasing use for the selected content data packaged together to mobile communication terminal apparatus 11 (step S308). Upon receiving the content data for previewing use before export + the content data for purchasing use from server 12 (step S309), download section 24a of mobile communication terminal apparatus 11 instructs management section 24b to install that which is content data for previewing use before export + the content data for purchasing use packaged together (step S310).

Next, management section 24b of mobile communication terminal apparatus 11 receives the instructions to install that which is content data for previewing use before export + the content data for purchasing use packaged together, acquires that which is content data for previewing use before export + the content data for purchasing use packaged together from download section 24a (step S311), and stores that which is content data for previewing use before export + the content data for purchasing use packaged together in memory card 13 via memory card I/F section 26 (step S312).

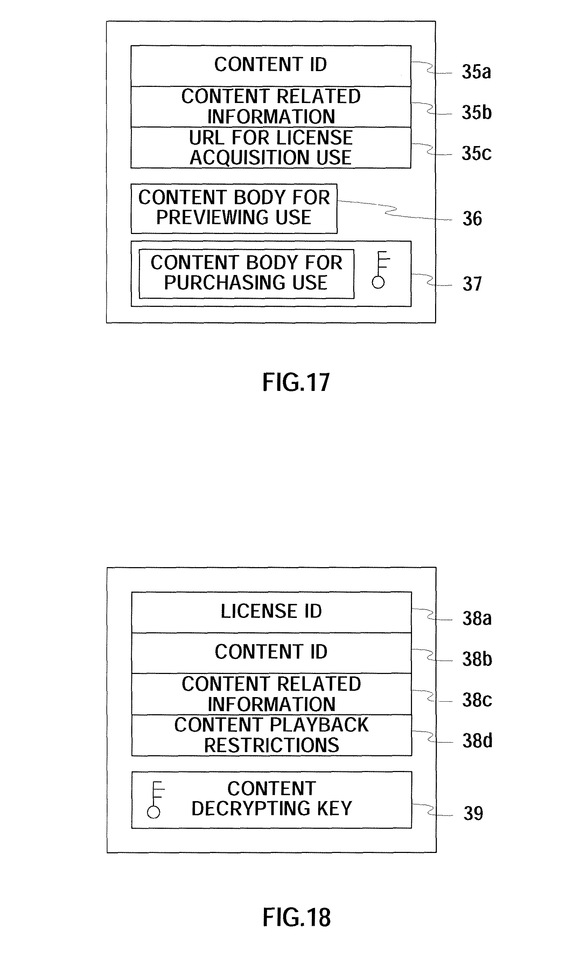

An example configuration for content data for previewing use before export + the content data before purchasing use of Embodiment 2 is shown in FIG.17. Content data for previewing use before export + the content data for purchasing use include content ID35a, content related information 35b, license acquisition URL35c, content body for previewing use 36, and content body for purchasing use 37. Content ID 35a is ID information for collating with content ID38b contained in unrestricted license data before export which will be described later. Content related information 35b is additional information etc. relating to the content data. Content body for previewing use 36 is stored as clear text, and may be utilized without license data. Content body for purchasing use 37 is stored in a state encrypted by a content encryption key, and as this content encryption key is stored in the corresponding license data, utilization is not possible without the corresponding license data.

Next, management section 24b of mobile communication terminal apparatus 11 reads out content data for reviewing use before export stored in memory card 13 via memory card I/F section 26 (steps S313, S314), and executes previewing processing for the content data for previewing use before export utilizing the playback function of mobile communication terminal apparatus 11 (step S315).

After completion of previewing processing, management section 24b of mobile communication terminal apparatus 11 displays a message containing an inquiry as to the desire to purchase the content etc. at display section 27 and invites a user to perform a content purchase operation after previewing. In the event that the user wishes to purchase the content, the process moves to the processing of FIG.16.

Next, after completion of previewing processing, management section 24b of mobile communication terminal apparatus 11 reads out content data for previewing use before export + the content data for purchasing use from a memory card via memory card I/F section 26 (steps S401, S402), reads out license acquisition URL 35c stored in this content data (step S403), and outputs it to download section 24a.

Download section 24a starts up a browser using a license acquisition URL inputted by management section 24b (step S404) and accesses server 12 (step S405). When the URL for license acquisition is accessed by mobile communication terminal apparatus 11, server 12 makes a license data list (step S406), and transmits this license data list to mobile communication terminal apparatus 11 (step S407). Upon receiving the license data list from server 12 (step S408), download section 24a of mobile communication terminal apparatus 11 displays this license data list at display section 27, and causes the user to select the desired license data (step S409). When the desired license data is selected by the user, download section 24a of mobile communication terminal apparatus 11 transmits this license data selection information to server 12 using transmitting and receiving section 22.

Next, upon receiving the license data selection information from mobile communication terminal apparatus 11 (step S410), server 12 transmits the corresponding unrestricted license data before export to mobile communication terminal apparatus 11 (step S411), and ends the processing. Upon receiving the unrestricted license data before export from server 12 (step S412), download section 24a of mobile communication terminal apparatus 11 outputs the unrestricted license data before export to management section 24b, and ends the processing. Upon acquiring unrestricted license data before export from download section 24a (step S413), management section 24b stores this unrestricted license data before export in storage section 25 (step S414).

Next, management section 24b reads out the content data for purchasing use before export stored in memory card 13 via memory card I/F section 26 (steps S415, S416), and reads out unrestricted license data before export from storage section 25 (steps S417, S418). Continuing on, management section 24b determines whether or not read out content data for purchasing use before export and unrestricted license data before export which were read out are capable of being exported to a different DRM system of memory card 13 (step S419).

An example configuration for unrestricted license data before export is shown in FIG.18. The unrestricted license data before export includes license ID 38a, content ID 38b, content related information 38c, content playback restrictions 38d and content decrypting key 39. License ID38a is specific ID information for identifying this license data. Content ID38b is ID information for collation with content ID35a contained in the above content data before export. Content related information 38c is additional information etc. relating to the content data. Content playback restrictions 38d sets information restricting the playback of content data. In the case of this embodiment, it is taken that "no restrictions" is set. Content decrypting key 39 is utilized in decrypting of content body 37 of content data before export.

Next, in the event that it is determined by management section 24b that it is not possible to export the content data for purchasing use before export and the unrestricted license data before export to the different DRM system of memory card 13 (step S419: NO), the process returns to step S417, other unrestricted license data before export is read out from storage section 25, and processing determining whether or not exporting is possible is similarly executed.

Further, in the event that it is determined that it is possible to export the content data before export and the unrestricted license data before export to the difference DRM system of memory card 13 (step S419: YES), management section 24b passes the content data for purchasing use before export over to transcription section 24c (step S420), transcription to a format and encryption method compatible with memory card 13 that is the export destination is performed at transcription section 24c, and make it content data for purchasing use after export (step S421), and content data for purchasing use after export is stored in memory card 13 after export via memory card I/F section 26 (step S422).

Next, management section 24b passes unrestricted license data over to transcription section 24c (step S423), and ends the processing. Transcription section 24c transcribes the unrestricted license data passed over from management section 24b so as to be compatible with the DRM system of memory card 13, make it unrestricted license data after export (step S424), stores the unrestricted data after export in memory card 13 via memory card I/F section 26 (step S425), and ends the processing.

After this, memory card 13 is taken out from mobile communication terminal apparatus 11, and it is possible to playback the content data for purchasing use after export stored in memory card 13 by installing another mobile terminal apparatus compatible with the DRM system of memory card 13.

In this way, with the content distribution system of Embodiment 2, the content data for previewing use before export and content data for purchasing use before export packaged together is downloaded from server 12 by mobile communication terminal apparatus 11, the content data for previewing use before export and content data for purchasing use before export packaged together is temporarily stored in memory card 13, and previewing of content data for previewing use before export is possible using the playback function of mobile communication terminal apparatus 11.

Further, with the content distribution system of Embodiment 2, in the event that a customer wishes to purchase previewed content after previewing, unrestricted license data is downloaded from server 12 by mobile communication terminal apparatus 11, content data for purchasing use before export stored in memory card 13 is transcribed to a format compatible with memory card 13 and exported to memory card 13, the unrestricted license data is transcribed so as to be compatible with the DRM system of memory card 13, and is exported to memory card 13.

Therefore, even if mobile terminal apparatus of the export destination does not have a previewing function, and even if the export destination terminal itself does not have a large capacity storage function, previewing of large capacity content is possible by utilizing a memory card at the export source terminal. Further, it is also possible to determine purchasing of unrestricted license data after confirmation of the contents of content as a result of the user previewing large capacity content and it is possible to execute account processing only for content as necessary.

Further, with the content distribution system of Embodiment 2, processing for downloading the license data for previewing use is omitted, download processing occurring at mobile communication terminal apparatus 11 can be reduced, and the download procedure by the user can be reduced.

Further, an example of exporting to a memory card has been shown in the content distribution system of this embodiment, but it is also possible to export to different DRMs other than storage media type DRMs such as memory cards etc., such as, for example, in local streaming protected by DRM (transferring or playing back from portions where transcription is complete while transcribing content for export use may be possible).

Further, with the content distribution system of this embodiment, content data for previewing use + content data for purchasing use are packaged and distributed together, but may also be distributed separately.

Further, with the content distribution system of this embodiment, content data for previewing use before export is read out from memory card 13 at the time of previewing (step 314, step 315), but content data for previewing use before export may also be stored in storage section 25 of mobile communication terminal 11.

Further, with the content distribution system of this embodiment, license data where restriction information of a number of 3 previews and a previewing period of day * of month * etc. is not set is assumed as unrestricted license data before export, but in place of this, it is also possible for restrictions compatible with the DRM of the export destination to be used.

Further, with the content distribution system of this embodiment, content data after export is played back by removing mobile communication terminal apparatus 11 after export (step S420 to step S425) and installing other mobile terminal apparatus compatible with the DRM system of memory card 13, but it is also possible for mobile communication terminal apparatus 11 itself to be provided with a DRM function after export so that content data after export may be played back at mobile communication terminal apparatus 11.

Further, with the content distribution system of this embodiment, it is also possible for unrestricted license data before export to be free.

Moreover, with the content distribution system of this embodiment, content data for previewing use before export, content data for purchasing use before export, and unrestricted license data before export are all acquired via communication network 14 from server 12, but data may also be acquired from a wired network such as the Internet, a broadcast network, or from other terminals etc.

Further, with the content distribution system of this embodiment, display section 27 of this embodiment is used in the case of displaying images or characters, but it is also possible for a speaker etc. to be provided so that the speaker may then be utilized in the case of playing back music etc.

### (Embodiment 3)

In Embodiment 3, a mobile communication terminal apparatus of the transfer source and a mobile terminal apparatus of the transfer destination have the same DRM system, but communication performance and content playback power are different. A case will be described where mobile terminal apparatus only has a playback function, previewing processing of content is carried out at mobile communication terminal apparatus, and content is transferred from mobile communication terminal apparatus to mobile terminal apparatus.

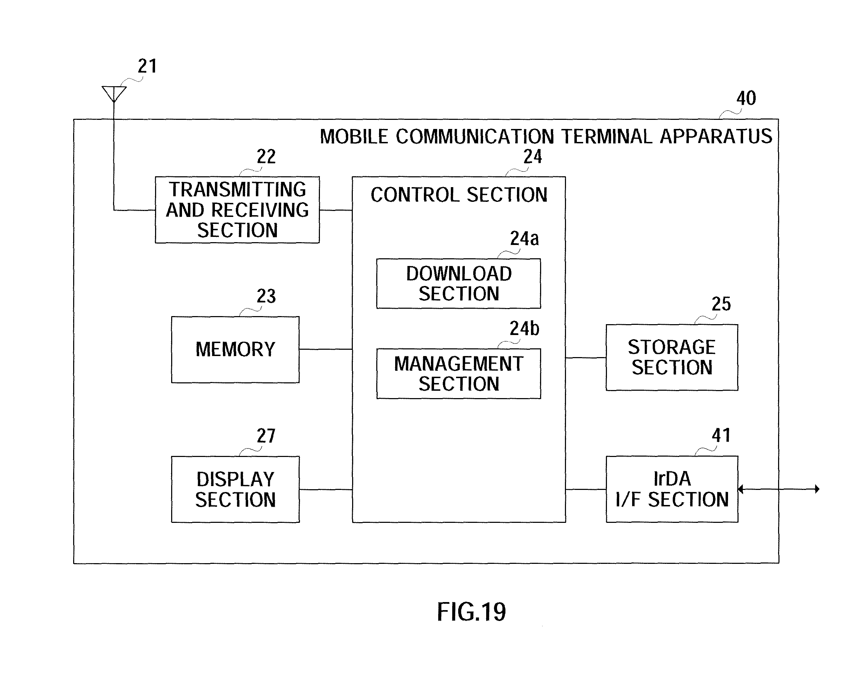

FIG.19 is a block view showing an internal configuration for mobile communication terminal apparatus 40 to which this embodiment is applied. The configuration in FIG.19 identical to those in mobile communication terminal apparatus 11 shown in FIG.2 above are assigned the same reference numerals, and description of configuration thereof will be omitted. Namely, parts of the configuration that are different at mobile communication terminal apparatus 40 of FIG.19 are the omission of transcription section 24c and newly providing IrDAI/F section 41 in place of memory I/F section 26. Further, the content distribution system of this embodiment is of the same configuration as shown in FIG. 1, and a description of these drawings and configuration will be therefore omitted.

IrDAI/F section 41 has an infra-red communication function based on IrDA (Infrared Data Association) and transmits license data and content data etc. inputted by control section 24 to mobile terminal apparatus that are the transfer destination using infrared communication.

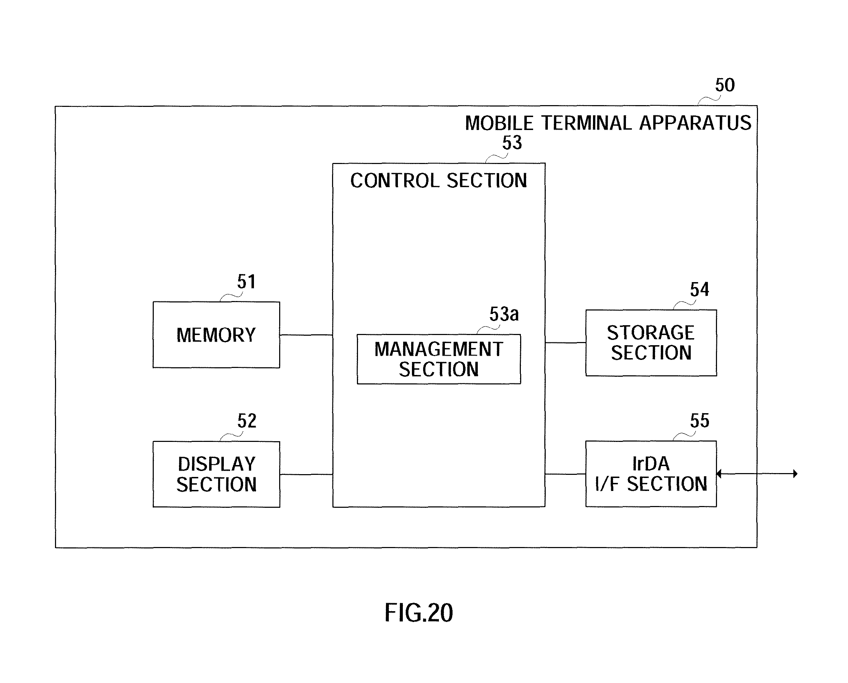

FIG.20 is a block view showing the internal configuration of mobile terminal apparatus 50 of the transfer destination. In FIG.20, mobile terminal apparatus 50 is mainly composed of memory 51, display section 52, control section 53, storage section 54, and Ir DAI/F section 55.

Memory 51 is composed of semiconductor memory such as ROM, and stores each type of control program etc. to be executed at control section 53. Display section 52 is composed of a liquid crystal panel etc., and displays information relating to content playback and information being infrared communication signal-processed.

Control section 53 has management section 53a. Management section 53a executes receiving processing for unrestricted license data and content data for dedicated use by mobile terminal apparatus 50 from mobile communication terminal apparatus 40 and executes storing processing for unrestricted license data and content data for dedicated use by mobile terminal apparatus 50 in storage section 54.

Storage section 54 stores unrestricted license data and content data for dedicated use by mobile terminal apparatus 50, etc. IrDAI/F section 55 executes receiving processing for unrestricted license data and content data for dedicated use by mobile terminal apparatus 50 transmitted from IrDAI/F section 41 of mobile communication terminal apparatus 40.

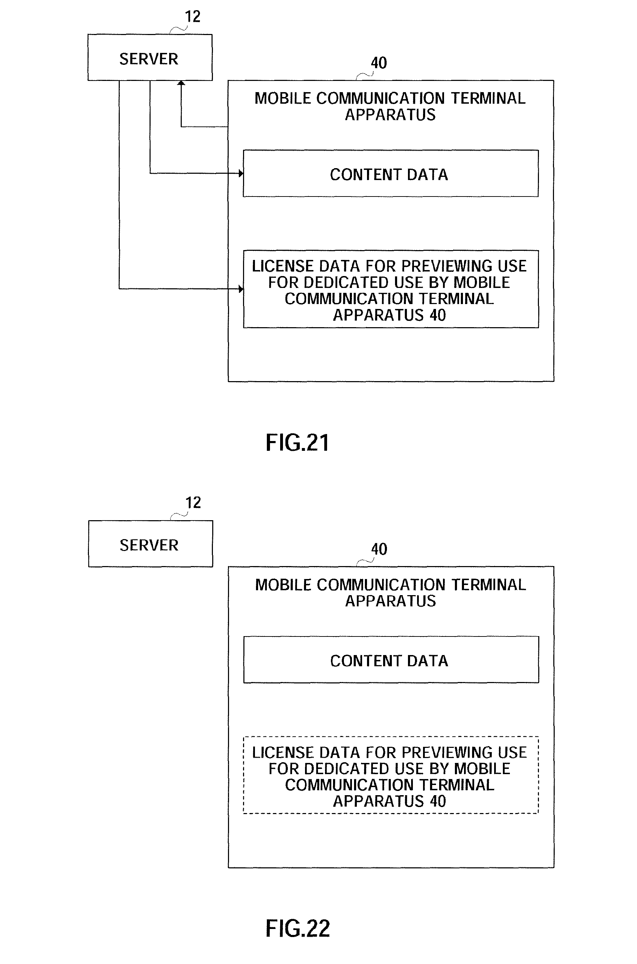

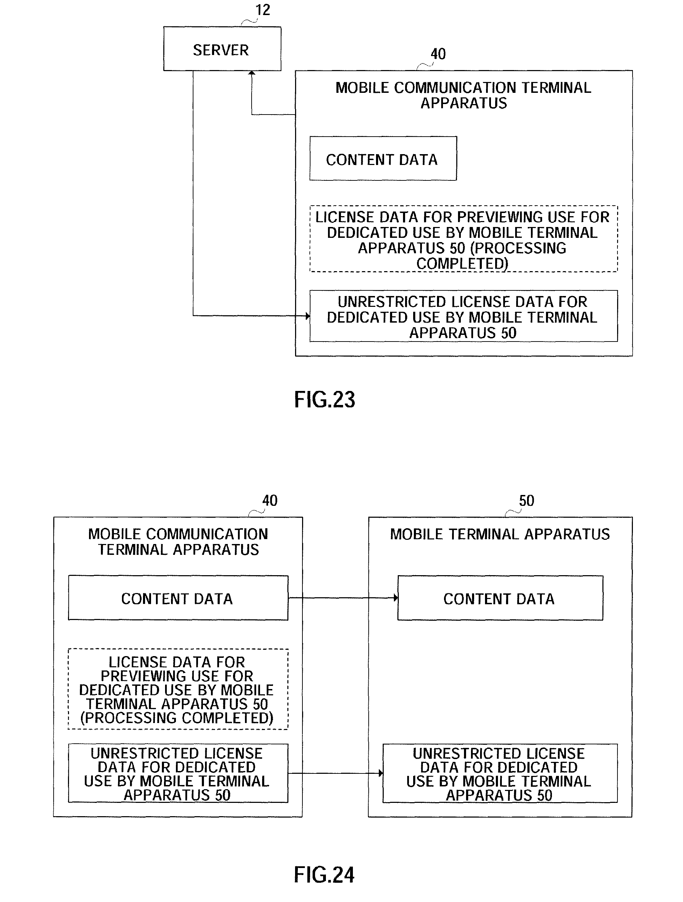

Next, an outline of a previewing operation and a transfer operation for content data will be described with reference to FIG.21 to FIG.24. FIG.21 and FIG.22 schematically show a download operation and previewing operation for content data and license data for previewing use for dedicated use by mobile communication terminal apparatus 40. FIG.23 and FIG.24 schematically show a download operation for unrestricted license data for dedicated use by mobile terminal apparatus 50 and a transfer operation for unrestricted license data and content data for dedicated use by mobile terminal apparatus 50.

First, in FIG.21, mobile communication terminal apparatus 40 accesses server 12, downloads content data and license data for previewing use for dedicated use by mobile communication terminal apparatus 40, and stores this in storage section 25 within mobile communication terminal apparatus 40. Next, in FIG.22, mobile communication terminal apparatus 40 executes previewing processing for content data stored in storage section 25 utilizing a playback function of mobile communication terminal apparatus 40.

After this, in FIG.23, mobile communication terminal apparatus 40 accesses server 12, and downloads unrestricted license data for dedicated use by mobile terminal apparatus 50, and stores this in storage section 25. Next, in FIG.24, mobile communication terminal apparatus 40 transfers unrestricted license data for dedicated use by mobile terminal apparatus 50 stored in storage section 25 to mobile terminal apparatus 50 using infrared communication which will be described later. Further, mobile communication terminal apparatus 40 transfers content data stored in storage section 25 to mobile terminal apparatus 50 using infrared communication which will be described later.

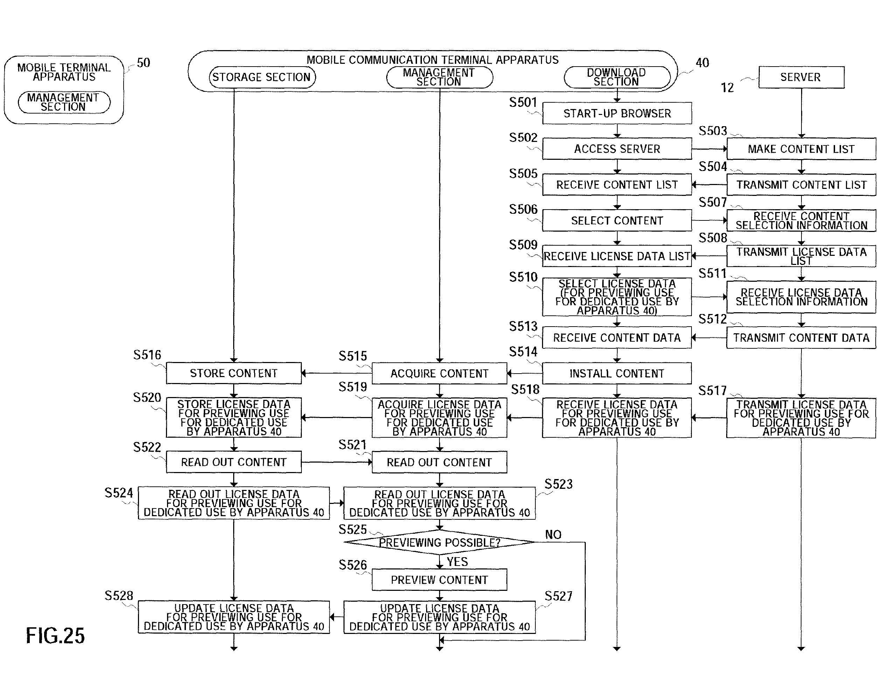

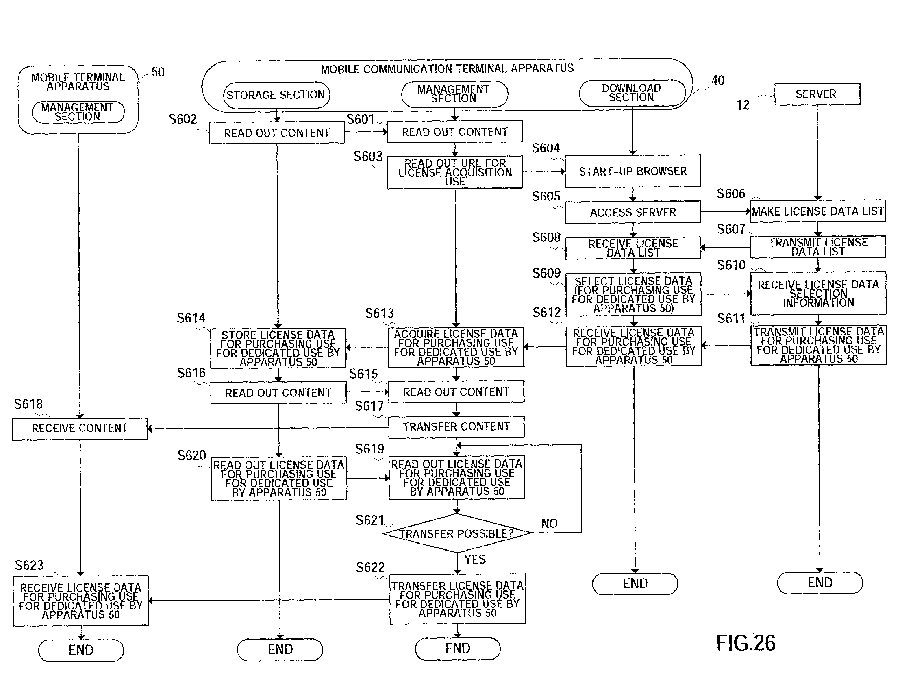

Next, a datailed description is given of a previewing operation and a transfer operation for content data with reference to FIG.25 and FIG.26. FIG.25 shows the datails of a download operation and a previewing operation for license data for previewing use for dedicated use by mobile communication terminal apparatus 40 of the content distribution system of this embodiment shown in FIG.21 and FIG.22. FIG.26 shows the datails of a download operation for unrestricted license data for dedicated use by mobile terminal apparatus 50 in a content distribution system of this embodiment shown in FIG.23 and FIG.24 and a transfer operation for unrestricted license data and content data for dedicated use by mobile terminal apparatus 50.

In FIG.25, at mobile communication terminal apparatus 40, download section 24a within control section 24 starts up a browser (step S501), and accesses a URL of server 12 (step S502). In this event, it is taken that a content distribution site for distributing content data is supplied by server 12 on communication network 14.

Next, when there is an access from mobile communication terminal apparatus 40, server 12 makes a content list showing content data that is the target of distribution in a list (step S503), and transmits this content list to mobile communication terminal apparatus 40 (step S504). Next, download section 24a of mobile communication terminal apparatus 40 receives the content list from server 12 at transmitting and receiving section 22 (step S505), displays this content list at display section 27, and causes the user to select the desired content (step S506). When the desired content is selected by the user, download section 24a of mobile communication terminal apparatus 40 transmits this content selection information to server 12 using transmitting and receiving section 22.

Next, upon receiving the content selection information from mobile communication terminal apparatus 40 (step S507), server 12 makes a license data list corresponding to the selected content and transmits this to mobile communication terminal apparatus 40 (step S508). Download section 24a of mobile communication terminal apparatus 40 receives the license data list from server 12 at transmitting and receiving section 22 (step S509), displays this license data list at display section 27, and causes the user to select the desired content (step S510). When the desired license data (for previewing use for dedicated use by mobile communication terminal apparatus 40) is selected by the user, download section 24a of mobile communication terminal apparatus 40 transmits license data selection information for previewing use for dedicated use by this mobile communication terminal apparatus 40 to server 12 using transmitting and receiving section 22.

Next, upon receiving the license data selection information for previewing use for dedicated use by mobile communication terminal apparatus 40 from mobile communication terminal apparatus 40 (step S511), server 12 transmits content data selected beforehand to mobile communication terminal apparatus 40 (step S512). Upon receiving the content data from server 12 by transmitting and receiving section 22 (step S513), download section 24a of mobile communication terminal apparatus 40 instructs installation of content data before export to management section 24b. Management section 24b receives an instruction to install content data from download section 24a, acquires content data from download section 24a (step S515), and stores this content data in storage section 25 (steps S515, S516).

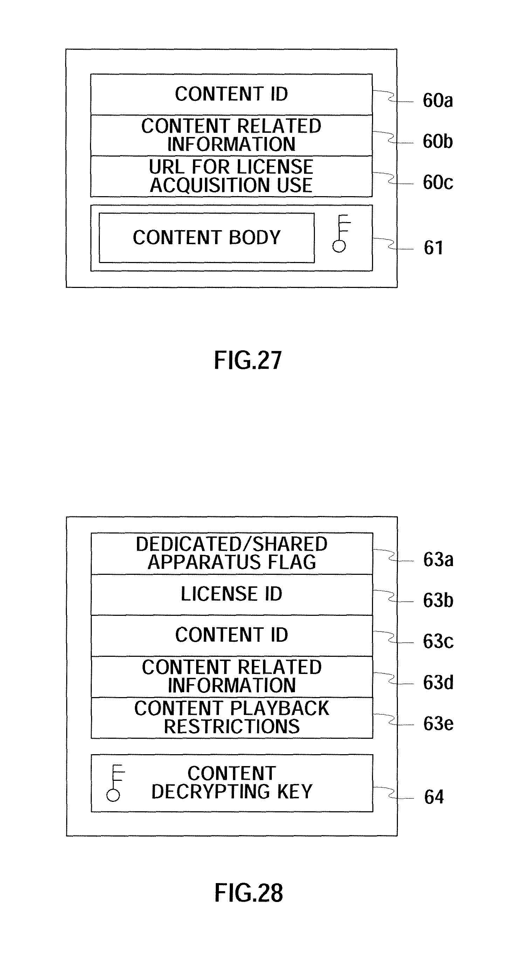

An example configuration for content data is shown in FIG.27. Content data includes content ID 60a, content related information 60b, license acquisition URL 60c and content body 61. Content ID 60a is ID information for collating content ID63c contained in license data for previewing use for dedicated use by mobile communication terminal apparatus 40 which will be described later and content ID 63c contained in license data for purchasing use dedicated use by mobile terminal apparatus 50. Content related information 60b is additional information etc. relating to the content data. Content body 61 is stored in a state encrypted by a content encryption key, and as this content encryption key is stored in the corresponding license data utilization is not possible without the corresponding license data.

Next, server 12 transmits license data for previewing use for dedicated use by mobile communication terminal apparatus 40 to mobile communication terminal apparatus 40 (step S517). Upon receiving license data for previewing use for dedicated use by mobile communication terminal apparatus 40 from server 12 by transmitting and receiving section 22 (step S518), download section 24a of mobile communication terminal apparatus 40 outputs this license data for previewing use for dedicated use by mobile communication terminal apparatus 40 to management section 24b. Upon acquiring license data for previewing use for dedicated use by mobile communication terminal apparatus 40 from download section 24a (step S519), management section 24b stores this license data for previewing use for dedicated use by mobile communication terminal apparatus 40 in storage section 25 (step S520).

An example configuration for license data for previewing use for dedicated use by mobile communication terminal apparatus 40 is shown in FIG.28. License data for previewing use for dedicated use by mobile communication terminal apparatus 40 includes apparatus dedicated/shared flag 63a, license ID 63b, content ID 63c, content related information 63d, content playback restrictions 63e and content decrypting key 64. Apparatus dedicated/shared flag 63a is a flag indicating whether license data is dedicated to use with a specific apparatus or is capable of being shared, and in the case of this embodiment, is taken to be set with a flag indicating for dedicated use by mobile communication terminal apparatus. License ID63b is specific ID information for identifying this license data. Content ID 63c is ID information for collation with content ID 60a contained in the content data. Content related information 63d is additional information etc. relating to the content data. Content playback restrictions 63e sets information restricting the playback of content data. In the case of this embodiment, for example, it is taken that a number of 3 previews, and a previewing period of * day of month etc is set. Content decrypting key 64 is utilized in decrypting of content body 61 of content data.

License data being for dedicated use by mobile communication terminal apparatus 40 means that it playback of content can be said to be possible utilizing this license data only at mobile communication terminal apparatus 40. For example, it is also possible to implement a method where ID information specific to mobile communication terminal apparatus 40 is described in license data so that only terminal apparatus in possession of this ID information is capable of playing back this content. Further, it is also possible to implement a method of encrypting content decrypting key 64 using a secret key specific to mobile communication terminal apparatus 40.

Next, management section 24b of mobile communication terminal apparatus 40 reads out content data from storage section 25 (step S521, S522), and license data for previewing use for dedicated use by mobile communication terminal apparatus 40 is read out from storage section 25 (steps S523, S524). Continuing on, management section 24b determines whether or not previewing of license data for previewing use for dedicated use by mobile communication terminal apparatus 40 and of content data which were read out is possible using the DRM system and playback function of mobile communication terminal apparatus 40 (step S525).

In the event that it is determined that previewing is possible (step S525: YES), management section 24b executes previewing processing for content data (step S526), previewing history for the license data for previewing use for dedicated use by mobile communication terminal apparatus 40 is updated (step S527), and the content of license data for previewing use for dedicated use by mobile communication terminal apparatus 40 of storage section 25 is updated (step S528). Previewing processing for the content data is executed by utilizing the content playback function within mobile communication terminal apparatus 40. Further, in the event that it is determined that previewing is not possible (step S525: NO), management section 24b discontinues previewing processing.

Restriction information relating to previewing such as, for example, a number of 3 previews, and a previewing period of up to * day of * month is set at license data for previewing use for dedicated use by mobile communication terminal apparatus 40. The user then previews the content data using mobile communication terminal apparatus 40, and in the event that conditions set in restriction information are reached so that, for example, previewing becomes no longer possible, a message including an inquiry as to the desire to purchase the content etc. is displayed at display section 27, and the user is invited to perform a content purchase operation after previewing. In the event that the user wishes to purchase the content, the process moves to the processing of FIG.23.

Next, in FIG.26, management section 24b of mobile communication terminal apparatus 40 reads out content data from storage section 25 (steps S601, S602), reads out license acquisition URL 60c stored in the content data before export (step S603), and outputs this to download section 24a.

Download section 24a starts up a browser using a license acquisition URL 60c inputted by management section 24b (step S604) and accesses server 12 (step S605). When the URL for license acquisition is accessed by mobile communication terminal apparatus 40, server 12 makes a license data list (step S606), and this license data list is transmitted to mobile communication terminal apparatus 40 (step S607). Upon receiving the license data list from server 12 (step S608), download section 24a of mobile communication terminal apparatus 40 displays this license data list at display section 27, and causes the user to select the desired license data (step S609). When the desired license data (for purchasing use for dedicated use by mobile terminal apparatus 50) is selected by the user, download section 24a of mobile communication terminal apparatus 40 transmits license data selection information for purchasing use for dedicated use by this mobile terminal apparatus 50 to server 12 using transmitting and receiving section 22.

Next, upon receiving license data selection information for purchasing use for dedicated use by mobile terminal apparatus 50 from mobile communication terminal apparatus 40 (step S610), server 12 transmits the license data for purchasing use for dedicated use by mobile terminal apparatus 50 to mobile communication terminal apparatus 40 (step S611), and ends the processing. Upon receiving license data for purchasing use for dedicated use by mobile terminal apparatus 50 from server 12 (step S612), download section 24a of mobile communication terminal apparatus 40 outputs this license data for purchasing use for dedicated use by mobile terminal apparatus 50 to management section 24b, and ends the processing. Upon acquiring license data for purchasing use for dedicated use by mobile terminal apparatus 50 from download section 24a (step S613), management section 24b stores this license data for purchasing use for dedicated use by mobile terminal apparatus 50 in storage section 25 (step S614).

An example configuration for license data for purchasing use for dedicated use by mobile terminal apparatus 50 is shown in FIG.28. This is the same format as the license data for previewing use for dedicated use by mobile communication terminal apparatus 40, but in the case of this embodiment, content playback restrictions 63e are taken to be set as "no restrictions." Content ID 63c and content decrypting key 64 have to be the same as the license data for previewing use for dedicated use by mobile communication terminal apparatus 40, but a separate ID is set for license ID 63b from the license data for previewing use for dedicated use by mobile terminal apparatus 40.

Next, management section 24b reads out content data stored in storage section 25 (steps S615, S616), and this content data is transferred to mobile terminal apparatus 50 using infrared communication using IrDAI/F section 41 (step S617). IrDAI/F section 55 of mobile terminal apparatus 50 receives content data sent using infrared from mobile communication terminal apparatus 40 and outputs this to management section 53a within control section 53. Management section 53a then stores content data acquired from IrDAI/F section 55 in storage section 54.

Next, management section 24b of mobile communication terminal apparatus 40 reads out license data for purchasing for dedicated use by mobile terminal apparatus 50 from storage section 25 (steps S619, S620), and determines whether or not it is possible to transfer license data for purchasing use for dedicated use by mobile terminal apparatus 50 to the DRM system of mobile terminal apparatus 50 (step S621). In the event that it is determined that it is possible to transfer license data for purchasing use for dedicated use by mobile terminal apparatus 50 to the DRM system of mobile terminal 50 (step S621: YES), management section 24b transfers license data for purchasing use for dedicated use by mobile terminal apparatus 50 to mobile terminal apparatus 50 using infrared communication using IrDAI/F section 41 (step S622), and ends the processing. IrDAI/F section 55 of mobile terminal apparatus 50 receives license data for purchasing use for dedicated use by mobile terminal apparatus 50 transmitted using infrared from mobile communication terminal apparatus 40 (step S623) and outputs this to management section 53a within control section 53. Management section 53a then stores license data for purchasing use for dedicated use by mobile terminal apparatus 50 acquired from IrDAI/F section 55 in storage section 54, and ends the processing.

Further, in the event that it is determined that license data for purchasing use for dedicated use by mobile terminal apparatus 50 cannot be transferred to the DRM system of mobile terminal apparatus 50 (step S621: NO), management section 24b of mobile communication terminal apparatus 40 returns to step S619, other license data for purchasing use for dedicated use by mobile terminal apparatus 50 is read out from storage section 25, and processing determining whether or not transfer is possible is similarly repeated.

In the above, with the content distribution system of Embodiment 3, license data for previewing use for dedicated use by mobile communication terminal apparatus and content data is downloaded from server 12 by mobile communication terminal apparatus 40 equipped with a communication function and a previewing function, and it is possible for the user of mobile terminal apparatus 50 to preview content data at mobile communication terminal apparatus 40.

With the content distribution system of Embodiment 3, when a user of mobile terminal apparatus 50 wishes to purchase previewed content data, license data for purchasing use for dedicated use by mobile terminal apparatus is downloaded from server 12 by a communication function of mobile communication terminal apparatus 40, license data for purchasing use for dedicated use by mobile terminal apparatus and content data is transferred to mobile terminal apparatus 50 using infrared communication, and it is possible to purchase content data from server 12 at mobile terminal apparatus 50 that does not have a communication function and previewing function.

It is therefore possible to purchase content data after a user of mobile terminal apparatus has previewed and confirmed contents of content on a separate mobile communication terminal apparatus such as mobile telephone apparatus etc. constituting a relay even at mobile terminal apparatus that does not have a communication function and previewing function such as music playback-dedicated terminal etc., and it is therefore possible to execute fee processing only for content that is required by a user.

Moreover, as it is possible to purchase content after previewing and confirming content even at mobile terminal apparatus that does not have a communication function and previewing function such as music playback-dedicated terminal, it is possible to broaden the users to which the content can be provided, and contribute to the development of the content business.

Further, transfer between mobile communication terminal apparatus 40 and mobile terminal apparatus 50 utilizes IrDA in the content distribution system of this embodiment, but transfer is also possible in other ways such as via Bluetooth, a USB, or a memory card.

Further, in FIG.25, after a content list is transmitted from server 12 to mobile communication terminal apparatus 40 (step S504), a license data list relating to content is transmitted to mobile communication terminal apparatus 40 (step S508), but it is also possible for the content list and the license data list to be transmitted at the same time, and for content selection and acquisition of license data for previewing use to be carried out at the same time.

Moreover, in FIG.25, after content data is received from server 12 (step S513), license data for previewing use for dedicated use by mobile communication terminal apparatus 40 is received (step S518), but content data may also be transmitted after transmission of license data for previewing use for dedicated use by mobile communication terminal apparatus 40.

Further, in FIG.25, after content data is received from server 12 (step S513), license data for previewing use for dedicated use by mobile communication terminal apparatus 40 is received (step S518), but content data and license data for previewing use for dedicated use by mobile communication terminal apparatus 40 may also be packaged and distributed together.

Further, after completion of the steps of FIG.25, in the event that conditions set in restriction information for license data for previewing use for dedicated use by mobile communication terminal apparatus 40 are reached, and the user wishes to purchase the content, the process moves to the processing of FIG.26. However, even if conditions set at restriction information of license data for previewing use for dedicated use by mobile communication terminal apparatus 40 are not reached, a message containing an inquiry as to the desire to purchase content etc. is displayed at display section 27, the user is invited to perform a content purchase operation after previewing. In the event that the user wishes to purchase the content, the process may move to the processing of FIG.26.

Moreover, with the content distribution system of this embodiment, license data where restriction information of a number of 3 previews and a previewing period of day * of month * etc. is not set is assumed as license data for purchasing use for dedicated use by mobile terminal apparatus 50, but in place of this, it is also possible for restrictions compatible with the DRM system of mobile terminal apparatus 50 to be used.

Further, with the content distribution system of this embodiment, license data for purchasing use for dedicated use by mobile terminal apparatus 50 is temporarily stored in storage section 25, but immediate transfer to mobile terminal apparatus 50 without being stored is also possible.

Moreover, with the content distribution system of this embodiment, purchasing is carried out after previewing, but the license data for previewing use for dedicated use with mobile communication terminal apparatus 40 may not be free. For example, the license data for previewing use for dedicated use by mobile communication terminal apparatus 40 and license data for purchasing use for dedicated use by mobile terminal apparatus 50 may be fee-paying, but the license data for previewing use for dedicated use by mobile communication terminal apparatus 40 may be set to a lower price. Further, conversely, it is also possible for license data for purchasing use for dedicated use with mobile terminal apparatus 50 to be free.

Moreover, with the content distribution system of this embodiment, license acquisition URL 30c is stored within content data, but may also be stored within license data for previewing use for dedicated use by mobile communication terminal apparatus 40.

Further, with the content distribution system of this embodiment, license data for previewing use for dedicated use by mobile communication terminal apparatus 40 is utilized for previewing, but it is also possible to package and distribute the content for previewing use and the content for purchasing use together, as in the above Embodiment 2.

Moreover, with the content distribution system of this embodiment, mobile terminal apparatus 50 does not have a communication function, but may have a communication function. For example, a situation where mobile communication terminal apparatus 40 is a terminal capable of high-speed data communication with server 12 such as a personal computer etc. and mobile terminal apparatus 50 is a mobile telephone etc. capable of communication with server 12, but not capable of high-speed data communication is also possible.

Further, with the content distribution system of this embodiment, content data, license data for previewing use for dedicated use by mobile communication terminal apparatus 40, and license data for purchasing use for dedicated use by mobile terminal apparatus 50 are all acquired from server 12 via communication network 14, but it is also possible to acquire this data from a wired network such as the Internet, a broadcast network, or as data from another terminal etc.

Further, with the content distribution system of this embodiment, display section 27 of this embodiment is used in the case of displaying images or characters, but it is also possible for a speaker etc. to be provided so that the speaker may then be utilized in the case of playing back music etc.

### (Embodiment 4)

In this embodiment, a case will be described where, in order to share content between terminal apparatus having a previewing function and terminal apparatus that does not have a previewing function in the same terminal apparatus group, previewing processing for the content is carried out on terminal apparatus having a previewing function, and shared license data and content data are copied to terminal apparatus that do not have a previewing function via a memory card from terminal apparatus having a previewing function.

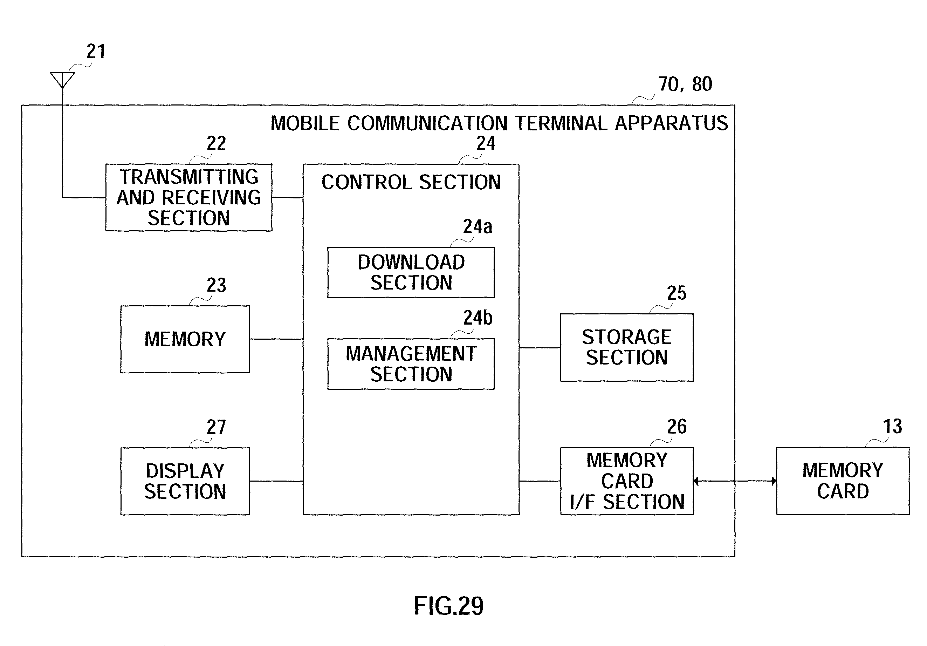

FIG.29 is a block view showing the internal configuration of mobile communication terminal apparatus 70 of the transfer source and mobile communication terminal apparatus 80 of the transfer destination. In FIG.29, portions of the configuration identical to those of mobile communication terminal apparatus 11 shown in FIG.2 above are given the same numerals, and description of the configuration will be omitted. Namely, the portions of the configuration that are different at mobile communication terminal apparatuses 70 and 80 of FIG.29 are that transcription section 24c is omitted.

Further, the content distribution system of this embodiment is identical to those as shown in FIG.1, and a description of these drawings and configuration will be omitted. Moreover, it is taken that mobile communication terminal apparatus 70 has a previewing function, and mobile communication terminal apparatus 80 does not have a previewing function. Further, mobile communication terminal apparatus 70 and mobile communication terminal apparatus 80 of this embodiment are such that information of each terminal apparatuses 70 and 80 is registered as belonging to the same terminal apparatus group in server 12 beforehand, and as a result, it is possible to share content between mobile communication terminal apparatus 70 and mobile communication terminal apparatus 80.

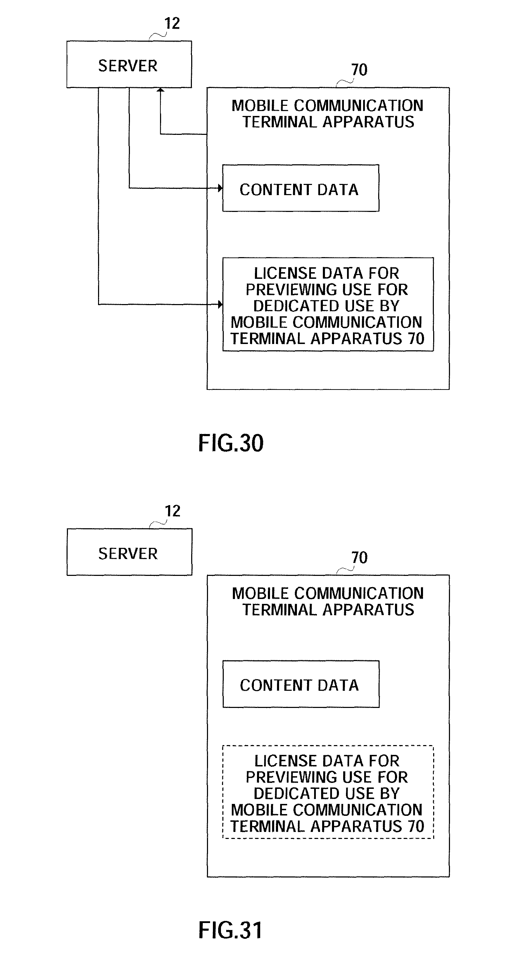

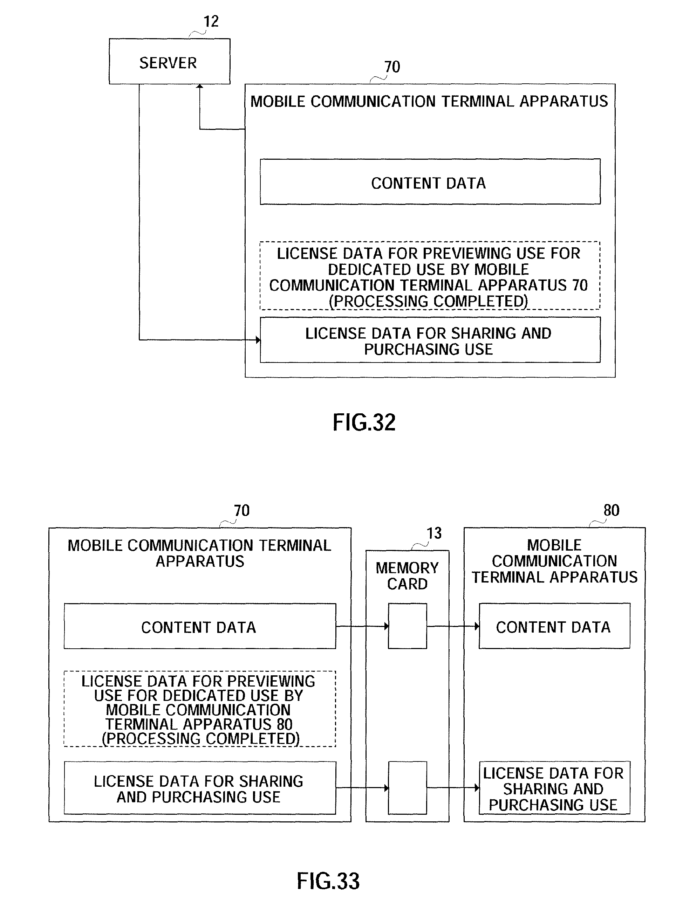

Next, a description is given of an outline of a previewing operation for content data and a share operation for content data with reference to FIG.30 to FIG.33. FIG.30 and 31 schematically show a download operation and a previewing operation for content data and license data for previewing use for dedicated use by mobile communication terminal apparatus 70. FIG.32 and FIG.33 schematically show a download operation for license data for sharing and purchasing use and a copy operation for license data and content data for sharing and purchasing use.

First, in FIG.30, mobile communication terminal apparatus 70 accesses server 12, downloads content data and license data for previewing use for dedicated use by mobile communication terminal apparatus 70, and stores this in storage section 25 within mobile communication terminal apparatus 70. Next, in FIG.31, mobile communication terminal apparatus 70 executes previewing processing of content data stored in storage section 25 utilizing a playback function of mobile communication terminal apparatus 70.

Next, in FIG.32, mobile communication terminal apparatus 70 accesses server 12, and downloads license data for sharing and purchasing use and stores it in storage section 25. Next, in FIG.33, mobile communication terminal apparatus 70 copies content data and license data for sharing and purchasing use stored in storage section 25 to mobile communication terminal apparatus 80 via memory card 13.

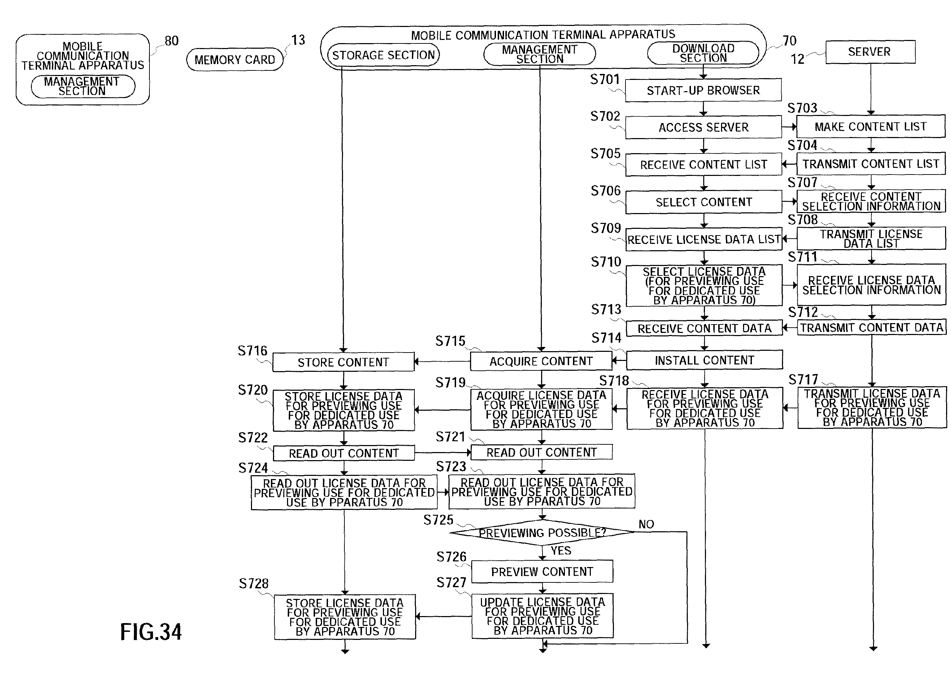

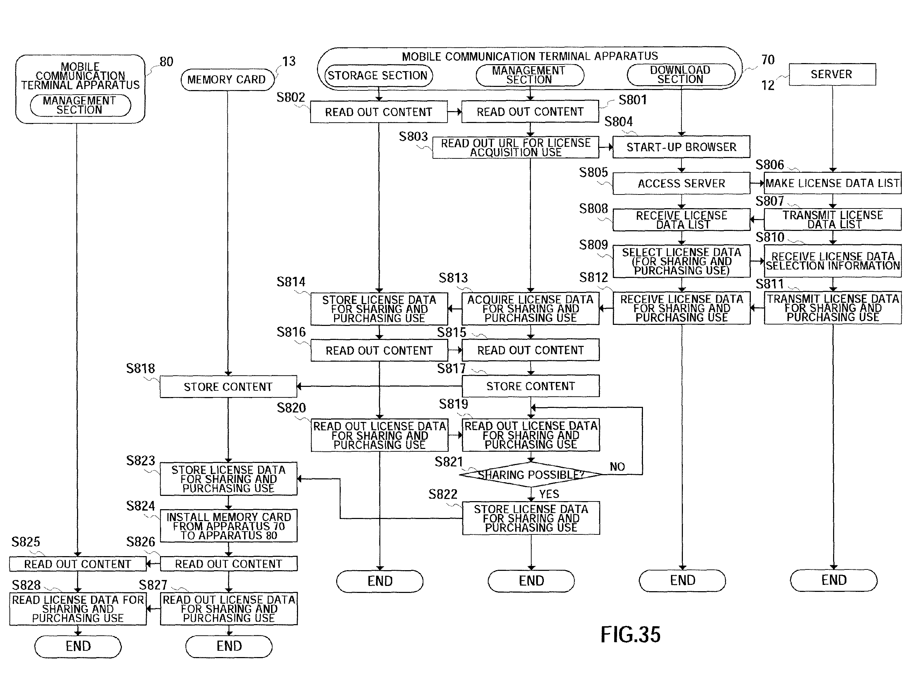

Next, a datailed description is given of a download operation and a previewing operation for content data and license data for previewing use with reference to FIG.34 and FIG.35. FIG.34 shows the datails of a download operation for and a previewing operation for content data and license data for previewing use for dedicated use by mobile communication terminal apparatus 70 of the content distribution system of this embodiment shown in FIG.30 and FIG.31. FIG.35 shows the datails of a download operation for license data for sharing and purchasing use in the content distribution system of this embodiment shown in FIG.32 and FIG.33, and shows the datails of a copy operation for content data and license data for sharing and purchasing use.

In FIG.34, at mobile communication terminal apparatus 70, download section 24a within control section 24 starts up a browser (step S701), and accesses a URL of server 12 (step S702). In this event, it is taken that a content distribution site for distributing content data is supplied by server 12 on communication network 14.

Next, when there is an access from mobile communication terminal apparatus 70, server 12 makes a content list showing content data that is the target of distribution in a list (step S703), and transmits this content list to mobile communication terminal apparatus 70 (step S704). Next, download section 24a of mobile communication terminal apparatus 70 receives the content list from server 12 at transmitting and receiving section 22 (step S705), displays this content list at display section 27, and causes the user to select the desired content (step S706). When the desired content is selected by the user, download section 24a of mobile communication terminal apparatus 70 transmits this content selection information to server 12 using transmitting and receiving section 22.

Next, upon receiving the content selection information from mobile communication terminal apparatus 70 (step S707), server 12 makes a license data list corresponding to the selected content and transmits this to mobile communication terminal apparatus 70 (step S708). Download section 24a of mobile communication terminal apparatus 70 receives the license data list from server 12 at transmitting and receiving section 22 (step S709), displays this license data list at display section 27, and causes the user to select the desired content by the user (step S710). When the desired license data (for previewing use for dedicated use by mobile communication terminal apparatus 70) is selected by the user, download section 24a of mobile communication terminal apparatus 70 transmits license data selection information for previewing use for dedicated use by this mobile communication terminal apparatus 70 to server 12 using transmitting and receiving section 22.

Next, upon receiving the license data selection information for previewing use for dedicated use by mobile communication terminal apparatus 70 from mobile communication terminal apparatus 70 (step S711), server 12 transmits content data selected beforehand to mobile communication terminal apparatus 70 (step S712). Upon receiving the content data from server 12 by transmitting and receiving section 22 (step S713), download section 24a of mobile communication terminal apparatus 70 instructs installation of content data before export to management section 24b. Management section 24b receives an instruction to install content data from download section 24a, acquires content data from download section 24a (step S715), and stores this content data in storage section 25 (steps S715, S716).

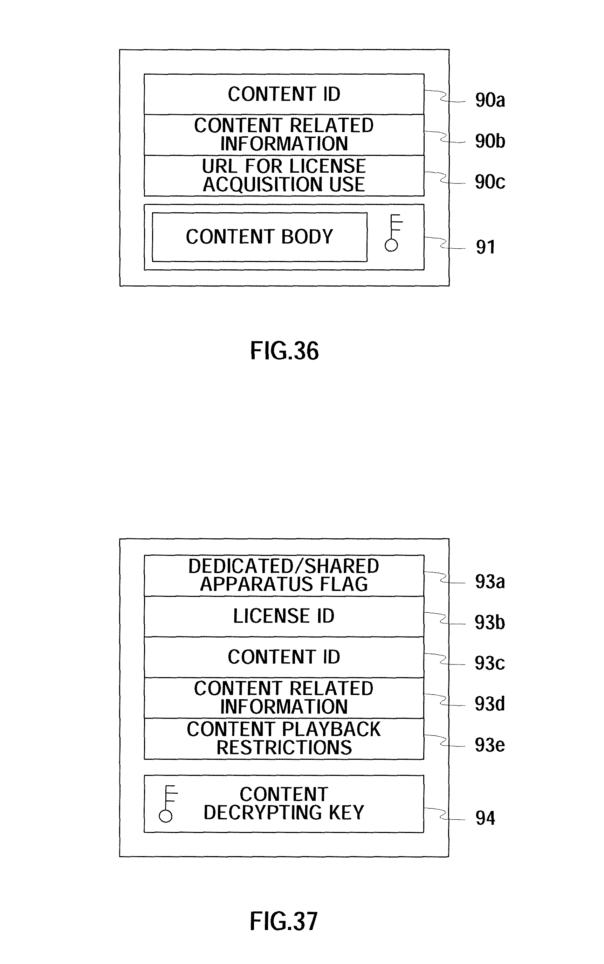

An example configuration for content data is shown in FIG.36. Content data includes content ID 90a, content related information 90b, license acquisition URL 90c and content body 91. Content ID 90a is ID information for collating license data for previewing use for dedicated use by mobile communication terminal apparatus 70 which will be described later and content ID 93c contained in license data for sharing and purchasing use. Content related information 90b is additional information etc. relating to the content data. Content body 91 is stored in a state encrypted by a content encryption key, and as this content encryption key is stored in the corresponding license data utilization is not possible without the corresponding license data.

Next, server 12 transmits license data for previewing use for dedicated use by mobile communication terminal apparatus 70 to mobile communication terminal apparatus 70 (step S717). Upon receiving license data for previewing use for dedicated use by mobile communication terminal apparatus 70 from server 12 by transmitting and receiving section 22 (step S718), download section 24a of mobile communication terminal apparatus 70 outputs this license data for previewing use for dedicated use by mobile communication terminal apparatus 70 to management section 24b. Upon acquiring license data for previewing use for dedicated use by mobile communication terminal apparatus 70 from download section 24a (step S719), management section 24b stores this license data for previewing use for dedicated use by mobile communication terminal apparatus 70 in storage section 25 (step S720).

An example configuration for license data for previewing use for dedicated use by mobile communication terminal apparatus 70 is shown in FIG.37. License data for previewing use for dedicated use by mobile communication terminal apparatus 70 includes apparatus dedicated/shared flag 93a, license ID 93b, content ID 93c, content related information 93d, content playback restrictions 93e and content decrypting key 94. Apparatus dedicated/shared flag 93a is a flag indicating whether license data is for dedicated use by a specific apparatus or is capable of being shared, and in the case of this embodiment, is taken to be set with a flag indicating for dedicated use by mobile communication terminal apparatus. License ID 93b is specific ID information for identifying this license data. Content ID 93c is ID information for collation with content ID 90a contained in the content data. Content related information 93d is additional information etc. relating to the content data. Content playback restrictions 93e sets information restricting the playback of content data. In the case of this example, for example, it is taken that a number of times of previewing of 3, and a previewing limit of * day of * month is set. Content decrypting key 94 is utilized in decrypting of content body 91 of content data.

Next, management section 24b of mobile communication terminal apparatus 70 reads out content data from storage section 25 (steps S721, S722), and license data for previewing use for dedicated use by mobile communication terminal apparatus 70 is read out from storage section 25 (steps S723, S724). Continuing on, management section 24b determines whether or not previewing of license data for previewing use for dedicated use by mobile communication terminal apparatus 70 and of content data which were read out is possible using the DRM system and playback function of mobile communication terminal apparatus 70 (step S725).

In the event that it is determined that previewing is possible (step S725: YES), management section 24b executes previewing processing for content data (step S726), updates previewing history for the license data for previewing use for dedicated use by mobile communication terminal apparatus 70 (step S727), and updates the content of license data for previewing use for dedicated use by mobile communication terminal apparatus of storage section 25 (step S728). Previewing processing for the content data is executed by utilizing the content playback function within mobile communication terminal apparatus 70. Further, in the event that it is determined that previewing is not possible (step S725: NO), management section 24b discontinues previewing processing.

Restriction information relating to previewing such as, for example, a number of 3 previews, and a previewing period of up to * day of * month is set at license data for previewing use for dedicated use by mobile communication terminal apparatus 70. The user then previews the content data using mobile communication terminal apparatus 70, and in the event that conditions set in restriction information are reached so that, for example, previewing becomes no longer possible, a message including an inquiry as to the desire to purchase the content etc. is displayed at display section 27, and the user is invited to perform a content purchase operation after previewing. In the event that the user wishes to purchase the content, the process moves to the processing of FIG.35.

Next, in FIG.35, management section 24b of mobile communication terminal apparatus 70 reads out content data from storage section 25 (steps S801, S802), reads out license acquisition URL90c stored in the content data before export (step S803), and outputs this to download section 24a.

Download section 24a starts up a browser using a license acquisition URL90c inputted by management section 24b (step S804) and accesses server 12 (step S805). When the URL for license acquisition is accessed by mobile communication terminal apparatus 70, server 12 makes a license data list (step S806), and transmits this license data list to mobile communication terminal apparatus 70 (step S807). Upon receiving the license data list from server 12 (step S808), download section 24a of mobile communication terminal apparatus 80 displays this license data list at display section 27, and causes the user to select the desired license data (step S809). When the desired license data (for sharing and purchasing use) is selected by the user, download section 24a of mobile communication terminal apparatus 70 transmits this license data selection information for sharing and purchasing use to server 12 using transmitting and receiving section 22.

Upon receiving the license data selection information for sharing and purchasing use from mobile communication terminal apparatus 70 (step S810), server 12 transmits the corresponding license data for sharing and purchasing use to mobile communication terminal apparatus 70 (step S811), and ends the processing. Upon receiving license data for sharing and purchasing use from server 12 (step S812), download section 24a of mobile communication terminal apparatus 70 outputs this license data for sharing and purchasing use to management section 24b, and ends the processing. Upon receiving license data for sharing and purchasing use from download section 24a (step S813), management section 24b stores this license data for sharing and purchasing use in storage section 25 (step S814).

An example configuration for license data for sharing and purchasing use is shown in FIG.37. Apparatus dedicated/shared flag 93a is the same format as the license data for previewing use for dedicated use by mobile communication terminal apparatus 70, but is a flag indicating whether license data is for dedicated use by specific apparatus or is capable of being shared and in the case of this embodiment, is a flag indicating that sharing is possible between mobile communication terminal apparatus 70 and mobile communication terminal apparatus 80. Content playback restrictions 93e sets information restricting the playback of content data. In the case of this embodiment, it is taken that "no restrictions" is set. Content decrypting key 94 has to be the same as the license data for previewing use for dedicated use by the mobile communication terminal apparatus 70, but a separate ID is set for license ID 93c from the license data for previewing use for dedicated use by mobile communication terminal apparatus 70.

The possibility of sharing between mobile communication terminal apparatus 70 and mobile communication terminal apparatus 80 means that mobile communication terminal apparatus 70 and mobile communication terminal apparatus 80 are capable of playing back content utilizing this same license data. For example, it is also possible to implement a method where ID information specific to the terminal apparatus group that mobile communication terminal apparatus 70 and mobile communication terminal apparatus 80 belong to is described in license data so that only a terminal apparatus group in possession of this ID information is capable of playing back this content. Further, it is also possible to implement a method of encrypting content decrypting key 94 using a secret key specific to this terminal apparatus group.

Next, management section 24b reads out content data from storage section 25 (steps S815, S817), and stores this content data in memory card 13 via memory card I/F section 26 (steps S817, S818). After this, management section 24b reads out license data for sharing and purchasing use from storage section 25 (steps S819, S820), and determines whether or not this license data for sharing and purchasing use is capable of being shared with the DRM system of mobile communication terminal apparatus 80 (step S821).

In the event that it is determined that license data for sharing and purchasing use is capable of being shared with the DRM system of mobile communication terminal apparatus 80 (step S821: YES), management section 24a stores license data for sharing and purchasing use in memory card 13 via memory card I/F section 26 (steps S822, S823). Further, in the event that management section 24a determines that it is not possible to share license data for sharing and purchasing use with the DRM system of mobile communication terminal apparatus 80 (step S821: NO), management section 24a returns to step S819, and other license data for sharing and purchasing use is read out and similar determination processing is repeated.

An indication that processing to store content data and license data for sharing and purchasing use in memory card 13 is complete is then displayed at display section 27 of mobile communication terminal apparatus 70. As a result of this displaying, the user removes the memory card 13 from mobile communication terminal apparatus 70, and installs it in mobile communication terminal apparatus 80 (step S824). When it is confirmed that memory card 13 is installed in memory card I/F section 26, management section 24b of mobile communication terminal apparatus 80 reads out content data from memory card 13 via memory card I/F section 26 (steps S825, S826), reads out license data for sharing and purchasing use (steps S827, S828), and ends this processing. Then, at mobile communication terminal apparatus 80, playback of content data is possible by reading out content data and license data for sharing and purchasing use from memory card 13.

As shown above, with the content distribution system of Embodiment 4, in order to share content data and license data between mobile communication terminal apparatus 70 having a previewing function and mobile communication terminal apparatus 80 that does not have a previewing function in the same terminal apparatus group, mobile communication terminal apparatus 70 downloads content data and license data for previewing use for dedicated use by mobile communication terminal apparatus 70 from server 12, and the previewing of this content data is then possible. After this previewing, mobile communication terminal apparatus 70 downloads license data for sharing and purchasing use from server 12, stores this license data for sharing and purchasing use and content data downloaded previously in memory card 13, and enables purchasing and playback of content data at mobile communication terminal apparatus 80 by installing this memory card 13 in mobile communication terminal apparatus 80.

Users of mobile communication terminal apparatus 80 that does not have a previewing function in the same terminal apparatus group are then able to share content data and license data with mobile communication terminal apparatus 80 after confirming contents of content data by previewing on terminal apparatus of mobile communication terminal apparatus 70 as a relay.

It is therefore possible to purchase content data after a user of mobile terminal apparatus has previewed and confirmed contents of content on a separate mobile communication terminal apparatus such as mobile telephone apparatus etc. constituting a relay even at terminal apparatus that does not have a previewing function such as music playback-dedicated terminals etc., and it is therefore possible to execute fee processing only for content that is required by a user.

Moreover, as it is possible to purchase content after previewing and confirming content even at mobile terminal apparatus that does not have a communication function and previewing function such as music playback-dedicated terminals, it is possible to broaden the users to which the content can be provided, and contribute to the development of the content business.

Further, sharing between mobile communication terminal apparatus 70 and mobile communication apparatus 80 utilizes a memory card in the content distribution system of this embodiment, but sharing is also possible in other ways such as via Bluetooth, a USB, or IrDA.

Further, in FIG.34, after content list is transmitted from server 12 to mobile communication terminal apparatus 70 (step S704), license data list relating to content is transmitted to mobile communication terminal apparatus 40 (step S708). However, it is also possible for the content list and the license data list to be transmitted at the same time, and for content selection and acquisition of license data for previewing use to be carried out at the same time.

Further, in FIG.34, after content data is received from server 12 (step S713), license data for previewing use for dedicated use by mobile communication terminal apparatus 70 is received (step S718). However, content data may also be transmitted after transmission of license data for previewing use for dedicated use by mobile communication terminal apparatus 70.

Further, in FIG.34, after content data is received from server 12 (step S713), license data for previewing use for dedicated use by mobile communication terminal apparatus 70 is received (step S718). However, content data and license data for previewing use for dedicated use by mobile communication terminal apparatus 70 may also be packaged and distributed together.

Further, after completion of the steps of FIG.34, in the event that conditions set in restriction information for license data for previewing use for dedicated use by mobile communication terminal apparatus 70 are reached, and the user wishes to purchase the content, the process moves to the processing of FIG.35. However, even if conditions set at restriction information of license data for previewing use for dedicated use by mobile communication terminal apparatus 70 are not reached, a message containing an inquiry as to the desire to purchase content etc. is displayed at display section 27, and the user is invited to perform a content purchase operation after previewing. In the event that the user wishes to purchase the content, the process may move to the processing of FIG.35.

Also, with the content distribution system of this embodiment, license data where restriction information of a number of 3 previews and a previewing period of day * of month * etc. is not set is assumed as license data for sharing and purchasing use, but in place of this, it is also possible for restrictions compatible with the DRM systems of both mobile communication terminal apparatus 70 and mobile communication terminal apparatus 80 to be used.

Moreover, with the content distribution system of this embodiment, purchasing is carried out after previewing, but the license data for previewing for dedicated use by mobile communication terminal apparatus 70 may not be free. For example, license data for previewing use for dedicated use by mobile communication terminal apparatus 70 and license data for sharing and purchasing use may both be fee-paying, but license data for previewing use for dedicated use by mobile communication terminal apparatus 70 may be set to a lower price. Further, conversely, it is also possible for license data for sharing and purchasing use to be free.

Further, with the content distribution system of this embodiment, license acquisition URL 30c is stored within content data, but may also be stored within license data for previewing use for dedicated use by mobile communication terminal apparatus 70.

Moreover, with the content distribution system of this embodiment, license data for previewing use for dedicated use by mobile communication terminal apparatus 70 is utilized for previewing, but it is also possible to package and distribute the content for previewing use and the content for purchasing use together, as in the above Embodiment 2.

Further, with the content distribution system of this embodiment, content data, license data for previewing use for dedicated use by mobile communication terminal apparatus 70, and license data for sharing and purchasing use are all acquired from server 12 via communication network 14, but it is also possible to acquire this data from a wired network such as the Internet, a broadcast network, or as data from another terminal etc.

Further, in the content distribution system of this embodiment, display section 27 of this embodiment is used in the case of displaying images or characters, but it is also possible for a speaker etc. to be provided so that the speaker may then be utilized in the case of playing back music etc.

A first aspect of data processing apparatus of the present invention adopts a configuration including a storage medium that stores content distributed from a distribution source, a previewing processing section that carries out previewing processing of the stored content, an acquisition section that acquires license data relating to handling of the content from a distribution source, a transcription section that reads out the license data and the stored content, and transcribes the license data and the stored content in such a manner as to be compatible with a management system that handles content of an export destination, and a management section that stores the transcribed license data and content in the storage medium.

According to this configuration, even if terminal apparatus of the export destination does not have a previewing function, and even if the export destination terminal apparatus does not have a large capacity storage function, previewing of large capacity content is possible by utilizing a removable storage medium at the export source. Further, it is also possible to determine purchasing of license data relating to handling of content after confirmation of the contents of content as a result of the user previewing large capacity content and it is possible to execute account processing only for content as necessary.

In a second aspect of data processing apparatus of the present invention, at the data processing apparatus disclosed in the first aspect, the acquisition section acquires license data for previewing use for the content from a distribution source, and the previewing processing section carries out previewing processing of the stored content in accordance with the license data for previewing use.

According to this configuration, even if mobile terminal apparatus of the export destination does not have a previewing function, and even if the export destination terminal itself does not have a large capacity storage function, previewing of large capacity content is possible by utilizing a storage medium at the export source. Further, it is also possible to determine purchasing of license data relating to handling of content after confirmation of the contents of content as a result of the user previewing large capacity content and it is possible to execute account processing only for content as necessary.

In a third aspect of data processing apparatus of the present invention, a configuration is adopted where, in the data processing apparatus disclosed in the first aspect, the storage medium stores content for previewing use and content for purchasing use distributed from a distribution source, and the previewing processing section carries out previewing processing of the stored content for previewing use.

According to this configuration, in order to store content data for previewing use and content for purchasing use packaged and distributed together from a source of distribution in a storage medium, after confirming contents of the content by previewing, the user is able to purchase content for purchasing use via the storage media simply by acquiring only license data for purchasing use, and the work involved in acquiring content for purchasing use is reduced.

In a fourth aspect of data processing apparatus of the present invention, in the data processing apparatus disclosed in the third aspect, a configuration is adopted where the content for previewing use and the content for purchasing use are packaged and distributed together from a distribution source.

According to this configuration, in order to store content data for previewing use and content for purchasing use packaged and distributed together from a distribution source in a storage medium, after confirming contents of the content by previewing, the user is able to purchase content for purchasing use via the storage media simply by acquiring only license data for purchasing use, and the work involved in acquiring content for purchasing use is reduced.

In a fifth aspect of the data processing apparatus of the present invention, a configuration is adopted where, at the data processing apparatus disclosed in the first aspect, the export destination for the content is a management system for handling content that does not have a previewing function.

According to this configuration, even if mobile terminal apparatus of the export destination does not have a previewing function, and even if the export destination terminal itself does not have a large capacity storage function, previewing of large capacity content is possible by utilizing a storage medium at the export source.

In a sixth aspect of the data processing apparatus of the present invention, at the data processing apparatus disclosed in the first aspect, a configuration is adopted where the storage medium is removable.

According to this configuration, even if mobile terminal apparatus of the export destination does not have a previewing function, and even if the export destination terminal itself does not have a large capacity storage function, it is possible to utilize purchased content simply by removing a storage medium from the data processing apparatus that is the source of exporting and installing this in the mobile terminal apparatus of the export destination after performing previewing and purchasing processing of the large volume content utilizing the storage medium at the export source.

A seventh aspect of the data processing apparatus of the present invention adopts a configuration where data processing apparatus for processing data containing license data relating to content includes a storage section that stores content distributed from a distribution source, a transfer section that transfers data, a previewing processing section that carries out previewing processing of the stored content, an acquisition section that acquires license data relating to handling of the content from a distribution source and a management section that transfers the license data and the stored content using the transfer section.

According to this configuration, it is possible to purchase content data after a user of mobile terminal apparatus that is the export destination has previewed and confirmed contents of content on a separate transfer destination terminal apparatus such as mobile telephone apparatus etc. constituting a relay even at terminal apparatus of a transfer destination that does not have a communication function and previewing function such as music playback-dedicated terminals etc., and it is therefore possible to execute fee processing only for content that is required by a user. Moreover, as it is possible to purchase content after previewing and confirming content even at terminal apparatus that does not have a communication function and previewing function such as music playback-dedicated terminal, it is possible to broaden the layer of users to which the content can be provided, and contribute to the development of the content business.

In an eighth aspect of the data processing apparatus of the present invention, at the data processing apparatus disclosed on the seventh aspect, a configuration is adopted where the license data is license data for dedicated use by terminal apparatus of a transfer destination.

According to this configuration, it is possible to purchase content data after a user has previewed and confirmed contents of content dedicated to terminal apparatus of the transfer destination on a separate transfer destination terminal apparatus such as mobile telephone apparatus etc. constituting a relay even at terminal apparatus of a transfer destination that does not have a communication function and previewing function such as music playback-dedicated terminal etc., and it is therefore possible to execute fee processing only for content that is required by the user of the dedicated terminal apparatus of the transfer destination.

In a ninth aspect of data processing apparatus of the present invention, at the data processing apparatus disclosed in the seventh aspect, a configuration is adopted where the acquisition section acquires license data for previewing use for the content from a distribution source, and the previewing processing section carries out previewing processing of the stored content in accordance with the license data for previewing use.

According to this configuration, it is possible to purchase content data after a user previews and confirms contents of content for terminal apparatus of the transfer destination on a separate transfer destination terminal apparatus such as mobile telephone apparatus etc. constituting a relay even at terminal apparatus of a transfer destination that does not have a communication function and previewing function such as music playback-dedicated terminal etc.

In a tenth aspect of the data processing apparatus of the present invention, a configuration is adopted where, at the data processing apparatus disclosed in the seventh aspect, the transfer destination for the content is a management system for handling content that does not have a previewing function.

According to this configuration, it is possible to purchase content data after a user has previewed and confirmed contents of content for terminal apparatus of the transfer destination on a separate transfer destination terminal apparatus such as mobile telephone apparatus etc. constituting a relay even at terminal apparatus of a transfer destination that does not have a communication function and previewing function such as music playback-dedicated terminal etc.

An eleventh aspect of the data processing apparatus of the present invention adopts a configuration where data processing apparatus for processing data containing license data relating to content includes a storage section that stores content distributed from a distribution source, a sharing section that shares data, a previewing processing section that carries out previewing processing of the stored content, an acquisition section that acquires license data for the content from a distribution source, and a management section that shares the license data and the stored content using the sharing section.

According to this configuration, users of sharing destination terminal apparatus that does not have a previewing function in the same terminal apparatus group are able to share content and license data using sharing source terminal apparatus and sharing destination terminal apparatus after confirming contents of content by previewing using the sharing source terminal apparatus as a relay. It is therefore possible to purchase content after a user of sharing destination terminal apparatus has previewed and confirmed contents of content on a separate sharing source terminal apparatus such as mobile telephone apparatus etc. constituting a relay even at sharing destination terminal apparatus that does not have a previewing function such as music playback-dedicated terminal etc., and it is therefore possible to execute fee processing only for content that is required by a user. Moreover, as it is possible to purchase content after previewing and confirming content even at sharing destination terminal apparatus that does not have a communication function and previewing function such as music playback dedicated terminal, it is possible to broaden the layer of users to which the content can be provided, and contributes to the development of the content business.

In a twelfth aspect of the data processing apparatus of the present invention, at the data processing apparatus disclosed on the eleventh aspect, a configuration is adopted where the license data is license data capable of being shared at the sharing source terminal apparatus and a sharing destination terminal apparatus.

According to this configuration, it is possible to share content data and license data using sharing source terminal apparatus and sharing destination terminal apparatus at the same terminal apparatus group, it is possible to omit processing for acquiring license data at sharing destination terminal apparatus, and it is possible to reduce communication costs.

In a thirteenth aspect of data processing apparatus of the present invention, at the data processing apparatus disclosed in the eleventh aspect, a configuration is adopted where the acquisition section acquires license data for previewing use for the content from a distribution source, and the previewing processing section carries out previewing processing of the stored content in accordance with the license data for previewing use.

According to this configuration, it is possible to purchase content data after a user of sharing destination mobile terminal apparatus has previewed and confirmed contents of content on a separate sharing destination terminal apparatus such as mobile telephone apparatus etc. constituting a relay even at terminal apparatus of a transfer destination that does not have a communication function and previewing function such as music playback-dedicated terminal etc., and it is therefore possible to execute fee processing only for content that is required by a user. Moreover, as it is possible to purchase content after previewing and confirming content even at terminal apparatus that does not have a communication function and previewing function such as music playback-dedicated terminal, it is possible to broaden the layer of users to which the content can be provided, and contribute to the development of the content business.

In a fourteenth aspect of the data processing apparatus of the present invention, a configuration is adopted where, at the data processing apparatus disclosed in the eleventh aspect, the sharing destination for the content is a management system for handling content that does not have a previewing function.

According to this configuration, users of sharing destination terminal apparatus that do not have a previewing function in the same terminal apparatus group are able to share content and license data using sharing source terminal apparatus and sharing destination terminal apparatus after confirming contents of content by previewing on the sharing source terminal apparatus as a relay. It is therefore possible to purchase content after a user of sharing destination terminal apparatus has previewed and confirmed contents of content on a separate providing source terminal apparatus such as mobile telephone apparatus etc. constituting a relay even at sharing destination terminal apparatus that does not have a previewing function such as music playback-dedicated terminal etc., and it is therefore possible to execute fee processing only for content that is required by a user.

This specification is based on Japanese patent application No.2004-177582, filed on June 15, 2004, the entire content of which is expressly incorporated herein by reference.

### Industrial Applicability

The present invention implements previewing of large volume content data on a playback-dedicated terminal, takes advantage of transfer functions between terminals, implements purchasing of content after previewing, and enables exporting of content data to systems handling different content, and as such is useful in electronic equipment such as mobile information terminals and mobile telephone apparatus etc., and recording media such as memory cards etc., in data processing apparatus etc. for carrying out processing of data containing license data relating to handling of digital content.

## Claims

1. A data processing apparatus for processing data containing license data relating to content, comprising:
a storage medium that stores content distributed from a distribution source;
a previewing processing section that carries out previewing processing of the stored content;
an acquisition section that acquires license data relating to handling of the content from a distribution source;
a transcription section that reads out the license data and the stored content, and transcribes the license data and the stored content in such a manner as to be compatible with a management system that handles content of an export destination; and
a management section that stores the transcribed license data and content in the storage medium.

2. The data processing apparatus according to claim 1,
wherein the acquisition section acquires license data for previewing use for the content from a distribution source; and
the previewing processing section carries out previewing processing of the stored content in accordance with the license data for previewing use.

3. The data processing apparatus according to claim 1,
wherein the storage medium stores content for previewing use and content for purchasing use distributed from a distribution source; and
the previewing processing section carries out previewing processing of the stored content for previewing use.

4. The data processing apparatus according to claim 3, wherein the content for previewing use and the content for purchasing use are packaged and distributed together from a distribution source.

5. The data processing apparatus according to claim 1, wherein the export destination for the content is a management system for handling content that does not have a previewing function.

6. The data processing apparatus according to claim 1, wherein the storage medium is removable.

7. A data processing apparatus for processing data containing license data relating to content, comprising:
a storage section that stores content distributed from a distribution source;
a transfer section that transfers data;
a previewing processing section that carries out previewing processing of the stored content;
an acquisition section that acquires license data relating to handling of the content from a distribution source; and
a management section that transfers the license data and the stored content using the transfer section.

8. The data processing apparatus according to claim 7, wherein the license data is license data for dedicated use by terminal apparatus of a transfer destination.

9. The data processing apparatus according to claim 7,
wherein the acquisition section acquires license data for previewing use for the content from a distribution source, and
the previewing processing section carries out previewing processing of the stored content in accordance with the license data for previewing use.

10. The data processing apparatus according to claim 7, wherein the transfer destination for the content is a management system for handling content that does not have a previewing function.

11. A data processing apparatus for processing data containing license data relating to content, comprising:
a storage section that stores content distributed from a distribution source;
a sharing section that shares data;
a previewing processing section that carries out previewing processing of the stored content;
an acquisition section that acquires license data for the content from a distribution source; and
a management section that shares the license data and the stored content using the sharing section.

12. The data processing apparatus according to claim 11, wherein the license data is license data capable of being shared at the sharing source terminal apparatus and the sharing destination terminal apparatus.

13. The data processing apparatus according to claim 11,
wherein the acquisition section acquires license data for previewing use for the content from a distribution source, and
the previewing processing section carries out previewing processing of the stored content in accordance with the license data for previewing use.

14. The data processing apparatus according to claim 11, wherein the sharing destination for the content is a management system for handling content that does not have a previewing function.
